# EUROPEAN PATENT SPECIFICATION

(11) **EP 4 323 811 B1**
(45) Date of publication and mention of the grant of the patent: **04.06.2025**
(21) Application number: 22717469.5
(22) Date of filing: 14.03.2022
(51) Int. Cl.: G01S 1/04, G01S 5/02, H04W 56/00, G01S 5/00, G01S 11/02

(54) **LOCATION PROTOCOL WITH ADAPTIVE RANGING TRIGGER**
STANDORTPROTOKOLL MIT ADAPTIVEM ENTFERNUNGSMESSAUSLÖSER
PROTOCOLE DE LOCALISATION AVEC DÉCLENCHEUR DE TÉLÉMÉTRIE ADAPTATIF

(30) Priority: 14.04.2021 US 202117230530
(43) Date of publication of application: 21.02.2024
(73) Proprietor: Qualcomm Incorporated, San Diego, CA 92121-1714 (US)
(72) Inventor: SINGH, Govind, San Diego, CA 92121-1714 (US); ZHANG, Xiaoxin, San Diego, CA 92121-1714 (US); SINGH, Sudhanshu, San Diego, CA 92121-1714 (US); VISHNOI, Surabhi, San Diego, CA 92121-1714 (US); GANJARLA, Sushmitha, Reddy, San Diego, CA 92121-1714 (US)
(74) Representative: Reddie & Grose LLP
(86) International application number: PCT/US2022/020149
(87) International publication number: WO 2022/220967

(56) References cited:
- WO-A1-2011/100475
- US-A1- 2013 154 693
- HEYDARIAAN MILAD ET AL: "R3: Reflection Resilient Concurrent Ranging with Ultra-Wideband Radios", 2019 15TH INTERNATIONAL CONFERENCE ON DISTRIBUTED COMPUTING IN SENSOR SYSTEMS (DCOSS), IEEE, 29 May 2019 (2019-05-29), pages 1 - 8, XP033599304, DOI: 10.1109/DCOSS.2019.00024

## Description

### CROSS-REFERENCE TO RELATED APPLICATIONS

This Patent Application claims priority to U.S. Patent Application No. 17/230,530 entitled "LOCATION PROTOCOL WITH ADAPTIVE RANGING TRIGGER" and filed on April 14, 2021, which is assigned to the assignee hereof.

### TECHNICAL FIELD

This disclosure relates generally to wireless communications, and more specifically, to positioning operations in a wireless network.

### DESCRIPTION OF THE RELATED TECHNOLOGY

Wireless communications systems provide various types of communications, content, and service to people around the globe. These systems, which can support communications with multiple users by sharing the time, frequency, and spatial resources of a wireless medium, may include code division multiple access (CDMA) systems, time division multiple access (TDMA) systems, frequency division multiple access (FDMA) systems, and orthogonal frequency division multiple access (OFDMA) systems (such as a Long Term Evolution (LTE) system or a Fifth Generation (5G) New Radio (NR) system). These multiple access technologies have been adopted in various telecommunication standards to provide a common protocol that enables different wireless devices to communicate on a municipal, national, regional, and even global level.

One example wireless communications standard is 5G NR, which is part of a continuous mobile broadband evolution promulgated by the Third Generation Partnership Project (3GPP) to meet new requirements associated with latency, reliability, security, scalability, and other requirements. Another example wireless communications standard is the IEEE 802.11 family of wireless communications standards, which governs the operation of wireless local area networks (WLANs), more commonly known as Wi-Fi networks.

As ranging operations in wireless networks become increasingly important for position determination and navigation, it is desirable to increase the accuracy with which such ranging operations can be performed. Additionally, it is desirable to ensure that changes in operating conditions of wireless devices that participate in ranging operations result in minimal, if any, ranging errors. Heydariaan Milad et al. "R3: Reflection Resilient Concurrent Ranging with Ultra-Wideband Radios", DOI: 10.1109/DCOSS.2019.00024 discusses a Reflection Resilient Ranging solution, to address critical scalability issues in UWV concurrent ranging. R3 makes use of the difference in the time deviation of ranging signals to detect concurrent responders and it is equipped with a clock skew correction method that enables accurate concurrent ranging in long distances. It evaluates R3 using Decawave DW1000 UWB chip by deploying the radio nodes in an office environment. The results show that R3 effectively detects concurrent ranging peaks in the presence of strong multipath. When equip R3 with a clock skew correction method, it reduces the concurrent ranging error induced by clock drift.

### SUMMARY

The invention is defined in the independent claims, to which attention is directed. The systems, methods, and devices of this disclosure may be used to minimize ranging errors resulting from clock drift and/or frequency offsets between wireless communication devices. In various implementations, aspects of the present disclosure can be used by a responder device to decline or postpone requests from initiator devices to perform ranging operations when the responder device's operating temperature exceeds a temperature threshold. In some instances, the temperature threshold may correspond to a specified frequency accuracy. In other instances, the temperature threshold may correspond to a maximum acceptable ranging error resulting from clock drift and/or frequency offsets of the responder device relative to the initiator device.

In some implementations, the responder device includes a transceiver, a memory, and one or more processors. The transceiver is configured to exchange wireless signals with one or more wireless communication devices. The memory is communicatively coupled to the one or more processors and to the transceiver, and may store computer code executable by the one or more processors. In various implementations, the transceiver receives a request for a ranging operation from an initiator device. The one or more processors are configured to determine whether a temperature of the responder device exceeds a threshold. In response to a determination that the temperature of the responder device exceeds the threshold, the one or more processors are configured to determine a time period after which the temperature of the responder device is expected to decrease below the threshold. The transceiver transmits a response frame including an indication based on the determined time period. The response frame also indicates the temperature of the responder device, whether the responder device's temperature exceeds the threshold, or any combination thereof. In some instances, the determination that the responder device's temperature exceeds the threshold may indicate that ranging errors resulting from clock drift and/or frequency offsets between the responder device and the initiator device are greater than an amount. In some implementations, the response frame may be a unicast frame transmitted to the initiator device. In other implementations, the response frame may be a multicast frame transmitted to the initiator device and one or more other wireless communication devices. In some other implementations, the response frame may be a broadcast frame. In one implementation, the RSTA may transmit the response frame including the determined time period when the determined time period is less than a value, and may refrain from transmitting the response frame when the determined time period is greater than or equal to the value.

In various implementations, the determined time period may indicate a number of beacon intervals during which the initiator device is to refrain from initiating ranging operations with the responder device. The determined time period may be based on the temperature of the responder device, an amount of time that the temperature of the responder device has exceeded the threshold, one or more other time periods previously determined for one or more temperatures of the responder device that exceeded the threshold, a correlation between temperatures of the responder device and ranging errors resulting from clock drift and/or frequency offsets between the responder device and the initiator device, an amount of queued data in the responder device, the number and size of active traffic flows handled by the responder device, or any combination thereof.

In various implementations, the frame may be an FTM action frame, a Trigger Frame (TF) Ranging Poll frame, or a responder-to-initiator (R2I) location measurement report (LMR). In some instances, the determined time period may be indicated by a timer included in the frame. In addition, or in the alternative, the temperature of the responder device may be indicated by one or both of a time-of-arrival (TOA) error field or a time-of-departure (TOD) error field of the frame. In some instances, one or both of the TOA error field or the TOD error field may be set to a predetermined value indicating that the temperature of the responder device exceeds the threshold.

In various implementations, the one or more processors may be configured to decline requests for ranging operations during the determined time period. In some implementations, the one or more processors may be configured to solicit transmission of a subsequent ranging request from the initiator device in response to the temperature of the responder device decreasing below the threshold. In some instances, the responder device may solicit the subsequent ranging request by transmitting an action frame which triggers transmission of the subsequent FTM request from the initiator device. The action frame may be a TF Ranging Poll frame, a location measurement report (LMR) frame, or a vendor action frame.

In some implementations, the one or more processors may be configured to determine, after expiration of the time period, whether the responder device's temperature is less than the threshold. The one or more processors may be configured to accept requests for ranging operations in response to a determination that the temperature of the responder device is less than the threshold. The one or more processors may be configured to transmit, via the transceiver, an action frame which triggers transmission of a subsequent ranging request from the initiator device.

In various implementations, a method is disclosed. The method is performed by a responder device, and includes receiving a request for a ranging operation from an initiator device. The method includes determining whether a temperature of the responder device exceeds a threshold. The method includes determining, in response to a determination that the temperature of the responder device exceeds the threshold, a time period after which the temperature of the responder device is expected to decrease below the threshold. The method includes transmitting a response frame including an indication based on the determined time period. The response frame may also indicate the temperature of the responder device, whether the responder device's temperature exceeds the threshold, or any combination thereof. In some instances, the determination that the responder device's temperature exceeds the threshold may indicate that ranging errors resulting from clock drift and/or frequency offsets between the responder device and the initiator device are greater than an amount. In some implementations, the response frame may be a unicast frame transmitted to the initiator device. In other implementations, the response frame may be a multicast frame transmitted to the initiator device and one or more other wireless communication devices. In some other implementations, the response frame may be a broadcast frame. In one implementation, the RSTA may transmit the response frame including the determined time period when the determined time period is less than a value, and may refrain from transmitting the response frame when the determined time period is greater than or equal to the value.

In some implementations, the determined time period may indicate a number of beacon intervals during which the initiator device is to refrain from initiating ranging operations with the responder device. The determined time period may be based on the temperature of the responder device, an amount of time that the temperature of the responder device has exceeded the threshold, one or more other time periods previously determined for one or more temperatures of the responder device that exceeded the threshold, a correlation between temperatures of the responder device and ranging errors resulting from clock drift and/or frequency offsets between the responder device and the initiator device, an amount of queued data in the responder device, the number and size of active traffic flows handled by the responder device, or any combination thereof.

In various implementations, the response frame may be an FTM action frame, a TF Ranging Poll frame, or a R2I LMR. In some instances, the determined time period may be indicated by a timer included in the response frame. In addition, or in the alternative, the temperature of the responder device may be indicated by one or both of a TOA error field or a TOD error field of the response frame. In some instances, one or both of the TOA error field or the TOD error field may be set to a predetermined value indicating that the temperature of the responder device exceeds the threshold.

In various implementations, the method may include declining requests for ranging operations during the determined time period. In some implementations, the method may include soliciting transmission of a subsequent ranging request from the initiator device in response to the temperature of the responder device decreasing below the threshold. In some instances, soliciting the transmission of the subsequent ranging request may include transmitting an action frame which triggers transmission of the subsequent ranging request from the initiator device. The action frame may be a TF Ranging Poll frame, an FTM frame, an LMR frame, or a vendor action frame.

In some implementations, the method may include determining, after expiration of the time period, whether the responder device's temperature is less than the threshold. The method may include accepting requests for ranging operations in response to a determination that the temperature of the responder device is less than the threshold. The method may include transmitting an action frame which triggers transmission of a subsequent ranging request from the initiator device.

In various implementations, a responder device is disclosed. In some implementations, the responder device may include means for receiving a request for a ranging operation from an initiator device. The responder device may include means for determining whether a temperature of the responder device exceeds a threshold. The responder device may include means for determining, in response to a determination that the temperature of the responder device exceeds the threshold, a time period after which the temperature of the responder device is expected to decrease below the threshold. The responder device may include means for transmitting a response frame including an indication based on the determined time period. The response frame may also indicate the temperature of the responder device, whether the responder device's temperature exceeds the threshold, or any combination thereof. In some instances, the determination that the responder device's temperature exceeds the threshold may indicate that ranging errors resulting from clock drift and/or frequency offsets between the responder device and the initiator device are greater than an amount. In some implementations, the response frame may be a unicast frame transmitted to the initiator device. In other implementations, the response frame may be a multicast frame transmitted to the initiator device and one or more other wireless communication devices. In some other implementations, the response frame may be a broadcast frame. In one implementation, the RSTA may transmit the response frame including the determined time period when the determined time period is less than a value, and may refrain from transmitting the response frame when the determined time period is greater than or equal to the value.

In some implementations, the determined time period may indicate a number of beacon intervals during which the initiator device is to refrain from initiating ranging operations with the responder device. The determined time period may be based on the temperature of the responder device, an amount of time that the temperature of the responder device has exceeded the threshold, one or more other time periods previously determined for one or more temperatures of the responder device that exceeded the threshold, a correlation between temperatures of the responder device and ranging errors resulting from clock drift and/or frequency offsets between the responder device and the initiator device, an amount of queued data in the responder device, the number and size of active traffic flows handled by the responder device, or any combination thereof.

In various implementations, the response frame may be an FTM action frame, a TF Ranging Poll frame, or an R2I LMR. In some instances, the determined time period may be indicated by a timer included in the response frame. In addition, or in the alternative, the temperature of the responder device may be indicated by one or both of a TOA error field or a TOD error field of the response frame. In some instances, one or both of the TOA error field or the TOD error field may be set to a predetermined value indicating that the temperature of the responder device exceeds the threshold.

In various implementations, the responder device may include means for declining requests for ranging operations during the determined time period. In some implementations, the responder device may include means for soliciting a subsequent ranging request from the initiator device in response to the temperature of the responder device decreasing below the threshold. In some instances, the responder device may solicit the subsequent ranging request by transmitting an action frame which triggers transmission of the subsequent ranging request from the initiator device. The action frame may be a TF Ranging Poll frame, an FTM frame, an LMR frame, or a vendor action frame.

In some implementations, the responder device may also include means for determining, after expiration of the time period, whether the responder device's temperature is less than the threshold. The responder device may include means for accepting requests for ranging operations in response to a determination that the temperature of the responder device is less than the threshold. The responder device may include means for transmitting an action frame which triggers transmission of a subsequent ranging request from the initiator device.

In various implementations, a non-transitory computer-readable medium storing computer executable code is disclosed. In one implementation, the computer executable code includes receiving a request for a ranging operation from an initiator device. The computer executable code includes determining whether a temperature of the responder device exceeds a threshold. The computer executable code includes determining, in response to a determination that the temperature of the responder device exceeds the threshold, a time period after which the temperature of the responder device is expected to decrease below the threshold. The computer executable code includes transmitting a response frame including an indication based on the determined time period. The response frame may also indicate the temperature of the responder device, whether the responder device's temperature exceeds the threshold, or any combination thereof. In some instances, the determination that the responder device's temperature exceeds the threshold may indicate that ranging errors resulting from clock drift and/or frequency offsets between the responder device and the initiator device are greater than an amount. In some implementations, the response frame may be a unicast frame transmitted to the initiator device. In other implementations, the response frame may be a multicast frame transmitted to the initiator device and one or more other wireless communication devices. In some other implementations, the response frame may be a broadcast frame. In one implementation, the RSTA may transmit the response frame including the determined time period when the determined time period is less than a value, and may refrain from transmitting the response frame when the determined time period is greater than or equal to the value.

In some implementations, the determined time period may indicate a number of beacon intervals during which the initiator device is to refrain from initiating ranging operations with the responder device. The determined time period may be based on the temperature of the responder device, an amount of time that the temperature of the responder device has exceeded the threshold, one or more other time periods previously determined for one or more temperatures of the responder device that exceeded the threshold, a correlation between temperatures of the responder device and ranging errors resulting from clock drift and/or frequency offsets between the responder device and the initiator device, an amount of queued data in the responder device, the number and size of active traffic flows handled by the responder device, or any combination thereof.

In various implementations, the response frame may be an FTM action frame, a TF Ranging Poll frame, or an R2I LMR. In some instances, the determined time period may be indicated by a timer included in the response frame. In addition, or in the alternative, the temperature of the responder device may be indicated by one or both of a TOA error field or a TOD error field of the response frame. In some instances, one or both of the TOA error field or the TOD error field may be set to a predetermined value indicating that the temperature of the responder device exceeds the threshold.

In various implementations, the computer executable code may include declining requests for ranging operations during the determined time period. In some implementations, the computer executable code may include soliciting a subsequent ranging request from the initiator device in response to the temperature of the responder device decreasing below the threshold. In some instances, the soliciting may include transmitting an action frame which triggers transmission of the subsequent ranging request from the initiator device. The action frame may be a TF Ranging Poll frame, an LMR frame, or a vendor action frame.

In some implementations, the computer executable code may include determining, after expiration of the time period, whether the responder device's temperature is less than the threshold. The computer executable code may include accepting requests for ranging operations in response to a determination that the temperature of the responder device is less than the threshold. The computer executable code may include transmitting an action frame which triggers transmission of a subsequent ranging request from the initiator device.

Details of one or more implementations of the subject matter described in this disclosure are set forth in the accompanying drawings and the description below. Other features, aspects, and advantages will become apparent from the description, the drawings and the claims. Note that the relative dimensions of the following figures may not be drawn to scale.

### BRIEF DESCRIPTION OF THE DRAWINGS

Figure 1 shows a pictorial diagram of an example wireless communication network.
Figure 2A shows an example protocol data unit (PDU) usable for communications between an access point (AP) and a number of stations (STAs)
Figure 2B shows an example field in the PDU of Figure 2A.
Figure 3A shows an example physical layer (PHY) preamble usable for communications between an AP and each of a number of STAs.
Figure 3B shows another example PHY preamble usable for communications between an AP and each of a number of STAs.
Figure 4 shows a block diagram of an example wireless communication device.
Figure 5A shows a block diagram of an example AP.
Figure 5B shows a block diagram of an example STA.
Figure 6 shows a sequence diagram of an example ranging operation.
Figure 7A shows a sequence diagram of an example ranging operation, according to some implementations.
Figure 7B shows a sequence diagram of an example ranging operation, according to other implementations.
Figure 7C shows a sequence diagram of an example ranging operation, according to some other implementations.
Figure 8 shows a timing diagram illustrating an example ranging operation, according to other implementations.
Figure 9A shows a timing diagram illustrating an example ranging operation, according to some other implementations.
Figure 9B shows a timing diagram illustrating an example ranging operation, according to some other implementations.
Figure 10 shows a flowchart illustrating an example ranging operation, according to some implementations.
Figure 11 shows a flowchart illustrating another example ranging operation, according to some implementations.
Figure 12 shows a flowchart illustrating another example ranging operation, according to some implementations.
Figure 13 shows a flowchart illustrating another example ranging operation, according to some implementations.
Figure 14A shows an example Fine Timing Measurement Request (FTMR) frame.
Figure 14B shows another example FTMR frame.
Figure 15A shows an example Fine Timing Measurement (FTM) action frame.
Figure 15B shows another example FTM action frame.
Figure 16A shows an example time-of-arrival (TOA) error field.
Figure 16B shows an example time-of-departure (TOD) error field.
Figure 17 shows an example Location Measurement Report (LMR) frame.

Like reference numbers and designations in the various drawings indicate like elements.

### DETAILED DESCRIPTION

Aspects of the disclosure are provided in the following description and drawings directed to various examples provided herein for illustration purposes. However, persons of ordinary skill in the art will readily recognize that the teachings herein can be applied in a multitude of different ways. The described implementations can be implemented in any device, system or network that is capable of transmitting and receiving radio frequency (RF) signals according to one or more of the Long Term Evolution (LTE), 3G, 4G or 5G (New Radio (NR)) standards promulgated by the 3rd Generation Partnership Project (3GPP), the Institute of Electrical and Electronics Engineers (IEEE) 802.11 standards, the IEEE 802.15 standards, or the Bluetooth^{®} standards as defined by the Bluetooth Special Interest Group (SIG), among others. Moreover, the described implementations can be implemented in any device, system or network that is capable of transmitting and receiving RF signals according to one or more of the following technologies or techniques: code division multiple access (CDMA), time division multiple access (TDMA), orthogonal frequency division multiplexing (OFDM), frequency division multiple access (FDMA), orthogonal frequency division multiple access (OFDMA), single-carrier FDMA (SC-FDMA), single-user (SU) multiple-input multiple-output (MIMO), and multi-user (MU) MIMO. The described implementations also can be implemented using other wireless communication protocols or RF signals suitable for use in one or more of a wireless wide area network (WWAN), a wireless personal area network (WPAN), a wireless local area network (WLAN), or an internet of things (IOT) network.

WLANs may be formed by one or more access points (APs) that provide a shared wireless medium for use by a plurality of wireless devices such as wireless stations (STAs) and user equipment (UE). The continuing deployment of APs in both public and private communication networks has made it possible for positioning and navigation systems to use these APs to determine the locations of STAs and UEs, especially in areas with high concentrations of active APs (e.g., urban cores, shopping centers, office buildings, sporting venues, and so on). For example, the round trip time (RTT) of signals exchanged between a STA and an AP can be used to determine the distance between the STA and the AP. The distances between the STA and three APs having known locations can be used to determine the position of the STA using trilateration techniques. Angle information, such as angle-of-arrival (AoA) and angle-of-departure (AoD) information, of the exchanged signals can be used to determine the position of the STA relative to the AP.

Wireless devices such as STAs and APs use a clock to generate carrier signals for transmitting and receiving data to and from other devices. These wireless devices use the same clock to generate or capture timestamps of signals exchanged during a ranging operation. That is, a wireless device uses a single clock to not only generate carrier signals for transmitting wireless signals, but also to capture the TOD of the transmitted wireless signals. Similarly, the wireless device uses the same clock to not only generate carrier signals for receiving wireless signals, but also to capture the TOA of the received wireless signals.

Clock drift and frequency offsets between wireless devices may result in ranging errors. For example, clock offsets between an AP and a STA may cause timestamps captured by the STA and timestamps captured by the AP during a ranging operation to be offset from one another. The offsets between timestamps captured by the STA and timestamps captured by the AP can cause errors in the RTT determined for signals exchanged between the STA and the AP. Since the distance between the AP and the STA is directly proportional to the determined RTT, errors in the determined RTT cause errors in the determined distance between the STA and the AP. Frequency offsets between the AP and the STA can reduce the speed and accuracy with which one or both of the AP or the STA can receive and successfully decode wireless transmissions from each other, which may exacerbate timestamp offsets between the AP and the STA resulting from clock drift. Moreover, as the clock drift or frequency offset between the AP and STA increases, timestamps captured by the AP and the STA may be increasingly offset from each other, thereby resulting in even larger ranging errors.

When the AP's clock is stable relative to the STA's clock (e.g., such that the AP's clock maintains a constant or near-constant oscillation frequency while the STA's clock drifts), the STA may use estimated carrier frequency offsets (CFOs) between the STA and the AP to align its clock with the AP's clock. For example, the AP can use wireless transmissions from the STA to determine the carrier frequency of the STA, estimate the CFO between the STA and the AP, and provide the estimated CFO to the STA. The estimated CFO can be used by the STA to adjust its clock frequency until synchronized with the AP's clock. The STA can also use the estimated CFO to adjust or correct its captured timestamps relative to the AP's timestamps. However, when the STA's clock is stable relative to the AP's clock (e.g., such that the STA's clock maintains a constant or near-constant oscillation frequency while the AP's clock drifts), synchronizing the STA's clock with the AP's drifting clock may result in both the AP's clock and the STA's clock drifting from their ideal or target clock frequency, which may cause even larger ranging errors.

The amount of clock drift and frequency offset between wireless devices may be affected by the operating temperatures of the wireless devices. For example, the clock drift or frequency offset of a wireless device tends to increase when the operating temperature of the wireless device increases. As such, ranging errors resulting from clock drift or frequency offsets between wireless devices typically increase when the operating temperatures of the wireless devices increases. Moreover, because correlations between clock drift and operating temperature may vary between different wireless devices, temperature increases of wireless devices participating in ranging operations may cause additional ranging accuracy uncertainties.

In accordance with implementations of the subject matter disclosed herein, techniques are disclosed that can be used to minimize ranging errors resulting from clock drift and frequency offsets between wireless devices participating in ranging or positioning operations. In various implementations, a first wireless device operating as a responder device may decline or postpone requests for ranging operations from one or more second wireless devices operating as initiator devices when the temperature of the responder device exceeds a temperature threshold. In some instances, the temperature threshold may correspond to a particular frequency accuracy such as (but not limited to) the +/- 20 ppm accuracy specified by the IEEE 802.11 family of wireless communications standards. In some other instances, the temperature threshold may correspond to a maximum acceptable ranging error resulting from clock drift and/or frequency offsets between the responder device and the one or more initiator devices. In this way, the responder device can avoid participating in ranging operations when the temperature of the responder device reaches or exceeds a threshold at which ranging errors resulting from clock drift or frequency offsets of the responder device are greater than a certain amount.

In various implementations, the responder device receives a request for a ranging operation from the initiator device, and determines whether its operating temperature exceeds the threshold. When the responder device's temperature is below the threshold, the responder device may perform the ranging operation with the initiator device. Conversely, when the responder device's temperature exceeds the threshold, the responder device may decline or postpone the ranging request and determine a time period after which the responder device's temperature is expected to decrease below the threshold. The responder device may indicate its temperature and the determined time period to the initiator device, for example, by transmitting a response frame to the initiator device. After obtaining the responder device's temperature and the determined time period, the initiator device may refrain from requesting ranging operations from the responder device during the time period. In some instances, the determined time period may indicate a number of beacon intervals during which the initiator device is to refrain from initiating ranging operations with the responder device.

The responder device may continue monitoring its temperature to determine whether its temperature exceeds the threshold. When the responder device's temperature decreases below the threshold (e.g., such that ranging errors resulting from clock drift or frequency offsets become less than the certain amount), the responder device may accept requests for ranging operations. In some instances, the responder device may indicate that its temperature has decreased below the threshold to the initiator device. In some other instances, the responder device may solicit ranging requests from the initiator device in response to its temperature decreasing below the threshold.

In some implementations, determination of the time period may be based on the temperature of the responder device, an amount of time that the temperature of the responder device has exceeded the threshold, one or more other time periods previously determined for one or more temperatures of the responder device that exceeded the threshold, a correlation between temperatures of the responder device and ranging errors resulting from clock drift and/or frequency offsets between the responder device and the initiator device, an amount of queued data in the responder device, the number and size of active traffic flows handled by the responder device, or any combination thereof. For example, if historical data indicates that it takes approximately 20 minutes for the temperature of the responder device to decrease from its current level to a temperature that is below the threshold, then the responder device may use 20 minutes as an estimate of determined time period.

Continuing with the example, if the responder device has a relatively large number of active traffic flows (such as more than a specified number), the responder device may select a time period that is greater than 20 minutes, for example, based on an expected power consumption and heat dissipation associated with processing the relatively large number of active traffic flows. Conversely, if the responder device has a relatively small number of active traffic flows (such as less than the specified number), or does not have any active traffic flows, the responder device may select a shorter time period, for example, based on the ability of the responder device to dissipate heat and thus decrease its operating temperature when processing the relatively small number of active traffic flows (or no active traffic flows).

By declining or postponing ranging requests when its operating temperature exceeds the threshold, the responder device may avoid participating in ranging operations likely to have unacceptable ranging errors resulting from clock drift and frequency offsets. In this way, a responder device employing various techniques disclosed herein can improve the overall accuracy of ranging operations performed by the responder device. In addition, the ability of the responder device to decline or postpone ranging requests when its operating temperature exceeds the threshold may allow the initiator device to reduce power consumption, for example, by refraining from requesting ranging operations that will be declined or postponed by the responder device.

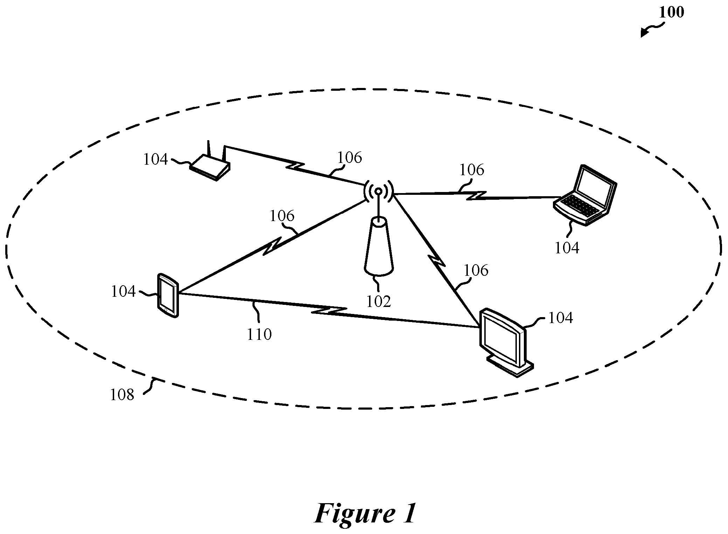

Figure 1 shows a block diagram of an example wireless communication network 100. According to some aspects, the wireless communication network 100 can be an example of a wireless local area network (WLAN) such as a Wi-Fi network (and will hereinafter be referred to as WLAN 100). For example, the WLAN 100 can be a network implementing at least one of the IEEE 802.11 family of standards (such as that defined by the IEEE 802.11-2016 specification or amendments thereof including, but not limited to, 802.11ah, 802.11ad, 802.11ay, 802.11ax, 802.11az, 802.11ba, and 802.11be). The WLAN 100 may include numerous wireless communication devices such as an access point (AP) 102 and multiple stations (STAs) 104. While only one AP 102 is shown, the WLAN network 100 also can include multiple APs 102.

Each of the STAs 104 also may be referred to as a mobile station (MS), a mobile device, a mobile handset, a wireless handset, an access terminal (AT), a user equipment (UE), a subscriber station (SS), or a subscriber unit, among other possibilities. The STAs 104 may represent various devices such as mobile phones, personal digital assistant (PDAs), other handheld devices, netbooks, notebook computers, tablet computers, laptops, display devices (for example, TVs, computer monitors, navigation systems, among others), music or other audio or stereo devices, remote control devices ("remotes"), printers, kitchen or other household appliances, key fobs (for example, for passive keyless entry and start (PKES) systems), among other possibilities.

A single AP 102 and an associated set of STAs 104 may be referred to as a basic service set (BSS), which is managed by the respective AP 102. Figure 1 additionally shows an example coverage area 106 of the AP 102, which may represent a basic service area (BSA) of the WLAN 100. The BSS may be identified to users by a service set identifier (SSID), as well as to other devices by a basic service set identifier (BSSID), which may be a medium access control (MAC) address of the AP 102. The AP 102 periodically broadcasts beacon frames ("beacons") including the BSSID to enable any STAs 104 within wireless range of the AP 102 to "associate" or re-associate with the AP 102 to establish a respective communication link 108 (hereinafter also referred to as a "Wi-Fi link"), or to maintain a communication link 108, with the AP 102. For example, the beacons can include an identification of a primary channel used by the respective AP 102 as well as a timing synchronization function for establishing or maintaining timing synchronization with the AP 102. The AP 102 may provide access to external networks to various STAs 104 in the WLAN via respective communication links 108.

To establish a communication link 108 with an AP 102, each of the STAs 104 is configured to perform passive or active scanning operations ("scans") on frequency channels in one or more frequency bands (for example, the 2.4 GHz, 5.0 GHz, 6.0 GHz, or 60 GHz bands). To perform passive scanning, a STA 104 listens for beacons, which are transmitted by respective APs 102 at a periodic time interval referred to as the target beacon transmission time (TBTT) (measured in time units (TUs) where one TU may be equal to 1024 microseconds (µs)). To perform active scanning, a STA 104 generates and sequentially transmits probe requests on each channel to be scanned and listens for probe responses from APs 102. Each STA 104 may be configured to identify or select an AP 102 with which to associate based on the scanning information obtained through the passive or active scans, and to perform authentication and association operations to establish a communication link 108 with the selected AP 102. The AP 102 assigns an association identifier (AID) to the STA 104 at the culmination of the association operations, which the AP 102 uses to track the STA 104.

As a result of the increasing ubiquity of wireless networks, a STA 104 may have the opportunity to select one of many BSSs within range of the STA or to select among multiple APs 102 that together form an extended service set (ESS) including multiple connected BSSs. An extended network station associated with the WLAN 100 may be connected to a wired or wireless distribution system that may allow multiple APs 102 to be connected in such an ESS. As such, a STA 104 can be covered by more than one AP 102 and can associate with different APs 102 at different times for different transmissions. Additionally, after association with an AP 102, a STA 104 also may be configured to periodically scan its surroundings to find a more suitable AP 102 with which to associate. For example, a STA 104 that is moving relative to its associated AP 102 may perform a "roaming" scan to find another AP 102 having more desirable network characteristics such as a greater received signal strength indicator (RSSI) or a reduced traffic load.

In some cases, STAs 104 may form networks without APs 102 or other equipment other than the STAs 104 themselves. One example of such a network is an ad hoc network (or wireless ad hoc network). Ad hoc networks may alternatively be referred to as mesh networks or peer-to-peer (P2P) networks. In some cases, ad hoc networks may be implemented within a larger wireless network such as the WLAN 100. In such implementations, while the STAs 104 may be capable of communicating with each other through the AP 102 using communication links 108, STAs 104 also can communicate directly with each other via direct wireless links 110. Additionally, two STAs 104 may communicate via a direct communication link 110 regardless of whether both STAs 104 are associated with and served by the same AP 102. In such an ad hoc system, one or more of the STAs 104 may assume the role filled by the AP 102 in a BSS. Such a STA 104 may be referred to as a group owner (GO) and may coordinate transmissions within the ad hoc network. Examples of direct wireless links 110 include Wi-Fi Direct connections, connections established by using a Wi-Fi Tunneled Direct Link Setup (TDLS) link, and other P2P group connections.

The APs 102 and STAs 104 may function and communicate (via the respective communication links 108) according to the IEEE 802.11 family of standards (such as that defined by the IEEE 802.11-2016 specification or amendments thereof including, but not limited to, 802.11ah, 802.11ad, 802.11ay, 802.11ax, 802.11az, 802.11ba, and 802.11be). These standards define the WLAN radio and baseband protocols for the PHY and medium access control (MAC) layers. The APs 102 and STAs 104 transmit and receive wireless communications (hereinafter also referred to as "Wi-Fi communications") to and from one another in the form of physical layer convergence protocol (PLCP) protocol data units (PPDUs). The APs 102 and STAs 104 in the WLAN 100 may transmit PPDUs over an unlicensed spectrum, which may be a portion of spectrum that includes frequency bands traditionally used by Wi-Fi technology, such as the 2.4 GHz band, the 5.0 GHz band, the 60 GHz band, the 3.6 GHz band, and the 900 MHz band. Some implementations of the APs 102 and STAs 104 described herein also may communicate in other frequency bands, such as the 6.0 GHz band, which may support both licensed and unlicensed communications. The APs 102 and STAs 104 also can be configured to communicate over other frequency bands such as shared licensed frequency bands, where multiple operators may have a license to operate in the same or overlapping frequency band or bands.

Each of the frequency bands may include multiple sub-bands or frequency channels. For example, PPDUs conforming to the IEEE 802.11n, 802.11ac, and 802.11ax standard amendments may be transmitted over the 2.4 and 5.0 GHz bands, each of which is divided into multiple 20 MHz channels. As such, these PPDUs are transmitted over a physical channel having a minimum bandwidth of 20 MHz, but larger channels can be formed through channel bonding. For example, PPDUs may be transmitted over physical channels having bandwidths of 40 MHz, 80 MHz, 160, or 320 MHz by bonding together multiple 20 MHz channels.

Each PPDU is a composite structure that includes a PHY preamble and a payload in the form of a PLCP service data unit (PSDU). The information provided in the preamble may be used by a receiving device to decode the subsequent data in the PSDU. In instances in which PPDUs are transmitted over a bonded channel, the preamble fields may be duplicated and transmitted in each of the multiple component channels. The PHY preamble may include both a legacy portion (or "legacy preamble") and a non-legacy portion (or "non-legacy preamble"). The legacy preamble may be used for packet detection, automatic gain control and channel estimation, among other uses. The legacy preamble also may generally be used to maintain compatibility with legacy devices. The format of, coding of, and information provided in the non-legacy portion of the preamble is based on the particular IEEE 802.11 protocol to be used to transmit the payload.

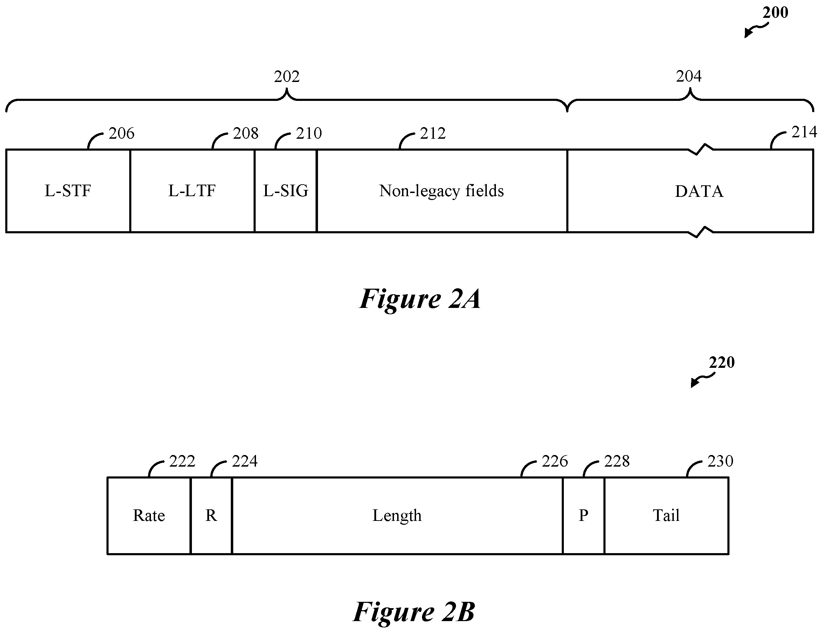

Figure 2A shows an example protocol data unit (PDU) 200 usable for communications between an AP and a number of STAs. For example, the PDU 200 can be configured as a PPDU. As shown, the PDU 200 includes a PHY preamble 202 and a PHY payload 204 after the preamble, for example, in the form of a PSDU including a data field 214. For example, the PHY preamble 202 may include a legacy portion that itself includes a legacy short training field (L-STF) 206, a legacy long training field (L-LTF) 208, and a legacy signaling field (L-SIG) 210. The PHY preamble 202 also may include a non-legacy portion including one or more non-legacy fields 212. The L-STF 206 generally enables a receiving device to perform automatic gain control (AGC) and coarse timing and frequency estimation. The L-LTF 208 generally enables a receiving device to perform fine timing and frequency estimation and also to estimate the wireless channel. The L-SIG 210 generally enables a receiving device to determine a duration of the PDU and use the determined duration to avoid transmitting on top of the PDU. For example, the L-STF 206, the L-LTF 208, and the L-SIG 210 may be modulated according to a binary phase shift keying (BPSK) modulation scheme. The payload 204 may be modulated according to a BPSK modulation scheme, a quadrature BPSK (Q-BPSK) modulation scheme, a quadrature amplitude modulation (QAM) modulation scheme, or another appropriate modulation scheme. The payload 204 may generally carry higher layer data, for example, in the form of medium access control (MAC) protocol data units (MPDUs) or aggregated MPDUs (A-MPDUs).

Figure 2B shows an example L-SIG field 220 in the PDU of Figure 2A. The L-SIG 220 includes a data rate field 222, a reserved bit 224, a length field 226, a parity bit 228, and a tail field 230. The data rate field 222 indicates a data rate (note that the data rate indicated in the data rate field 222 may not be the actual data rate of the data carried in the payload 204). The length field 226 indicates a length of the packet in units of, for example, bytes. The parity bit 228 is used to detect bit errors. The tail field 230 includes tail bits that are used by the receiving device to terminate operation of a decoder (for example, a Viterbi decoder). The receiving device utilizes the data rate and the length indicated in the data rate field 222 and the length field 226 to determine a duration of the packet in units of, for example, microseconds (µs).

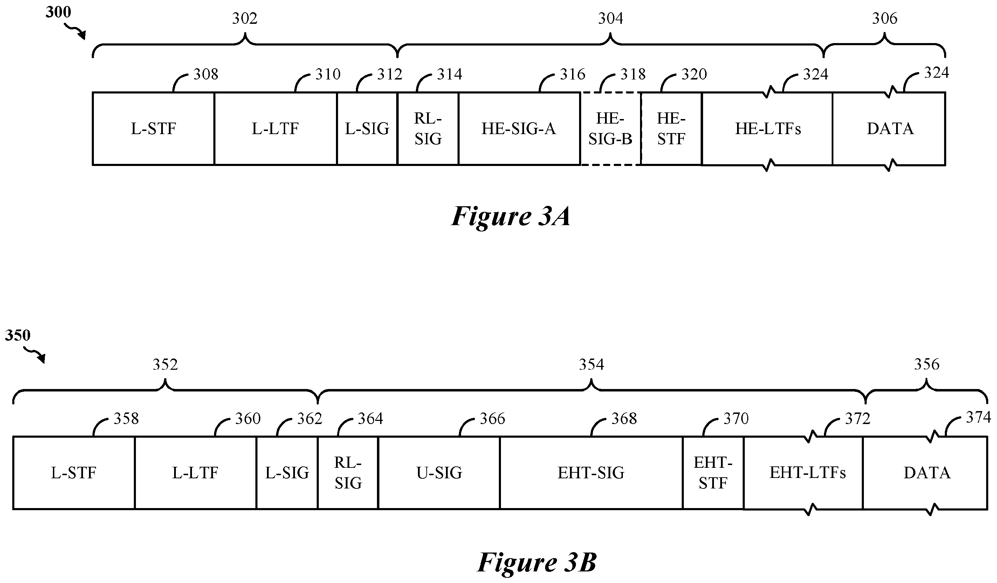

Figure 3A shows an example PHY preamble 300 usable for wireless communication between an AP and one or more STAs. The PHY preamble 300 may be used for SU, OFDMA or MU-MIMO transmissions. The PHY preamble 300 may be formatted as a High Efficiency (HE) WLAN PHY preamble in accordance with the IEEE 802.11ax amendment to the IEEE 802.11 wireless communication protocol standard. The PHY preamble 300 includes a legacy portion 302 and a non-legacy portion 304. The PHY preamble 300 may be followed by a PHY payload 306, for example, in the form of a PSDU including a data field 324.

The legacy portion 302 of the PHY preamble 300 includes an L-STF 308, an L-LTF 310, and an L-SIG 312. The non-legacy portion 304 includes a repetition of L-SIG (RL-SIG) 314, a first HE signal field (HE-SIG-A) 316, an HE short training field (HE-STF) 320, and one or more HE long training fields (or symbols) (HE-LTFs) 322. For OFDMA or MU-MIMO communications, the second portion 304 further includes a second HE signal field (HE-SIG-B) 318 encoded separately from HE-SIG-A 316. Like the L-STF 308, L-LTF 310, and L-SIG 312, the information in RL-SIG 314 and HE-SIG-A 316 may be duplicated and transmitted in each of the component 20 MHz channels in instances involving the use of a bonded channel. In contrast, the content in HE-SIG-B 318 may be unique to each 20 MHz channel and target specific STAs 104.

RL-SIG 314 may indicate to HE-compatible STAs 104 that the PDU carrying the PHY preamble 300 is an HE PPDU. An AP 102 may use HE-SIG-A 316 to identify and inform multiple STAs 104 that the AP has scheduled UL or DL resources for them. For example, HE-SIG-A 316 may include a resource allocation subfield that indicates resource allocations for the identified STAs 104. HE-SIG-A 316 may be decoded by each HE-compatible STA 104 served by the AP 102. For MU transmissions, HE-SIG-A 316 further includes information usable by each identified STA 104 to decode an associated HE-SIG-B 318. For example, HE-SIG-A 316 may indicate the frame format, including locations and lengths of HE-SIG-Bs 318, available channel bandwidths and modulation and coding schemes (MCSs), among other examples. HE-SIG-A 316 also may include HE WLAN signaling information usable by STAs 104 other than the identified STAs 104.

HE-SIG-B 318 may carry STA-specific scheduling information such as, for example, STA-specific (or "user-specific") MCS values and STA-specific RU allocation information. In the context of DL MU-OFDMA, such information enables the respective STAs 104 to identify and decode corresponding resource units (RUs) in the associated data field 324. Each HE-SIG-B 318 includes a common field and at least one STA-specific field. The common field can indicate RU allocations to multiple STAs 104 including RU assignments in the frequency domain, indicate which RUs are allocated for MU-MIMO transmissions and which RUs correspond to MU-OFDMA transmissions, and the number of users in allocations, among other examples. The common field may be encoded with common bits, CRC bits, and tail bits. The user-specific fields are assigned to particular STAs 104 and may be used to schedule specific RUs and to indicate the scheduling to other WLAN devices. Each user-specific field may include multiple user block fields. Each user block field may include two user fields that contain information for two respective STAs to decode their respective RU payloads in data field 324.

Figure 3B shows another example PHY preamble 350 usable for wireless communication between an AP and one or more STAs. The PHY preamble 350 may be used for SU, OFDMA or MU-MIMO transmissions. The PHY preamble 350 may be formatted as an Extreme High Throughput (EHT) WLAN PHY preamble in accordance with the IEEE 802.11be amendment to the IEEE 802.11 wireless communication protocol standard, or may be formatted as a PHY preamble conforming to any later (post-EHT) version of a new wireless communication protocol conforming to a future IEEE 802.11 wireless communication protocol standard or other wireless communication standard. The PHY preamble 350 includes a legacy portion 352 and a non-legacy portion 354. The PHY preamble 350 may be followed by a PHY payload 356, for example, in the form of a PSDU including a data field 374.

The legacy portion 352 of the PHY preamble 350 includes an L-STF 358, an L-LTF 360, and an L-SIG 362. The non-legacy portion 354 of the preamble includes an RL-SIG 364 and multiple wireless communication protocol version-dependent signal fields after RL-SIG 364. For example, the non-legacy portion 354 may include a universal signal field 366 (referred to herein as "U-SIG 366") and an EHT signal field 368 (referred to herein as "EHT-SIG 368"). One or both of U-SIG 366 and EHT-SIG 368 may be structured as, and carry version-dependent information for, other wireless communication protocol versions beyond EHT. The non-legacy portion 354 further includes an additional short training field 370 (referred to herein as "EHT-STF 370," although it may be structured as, and carry version-dependent information for, other wireless communication protocol versions beyond EHT) and one or more additional long training fields 372 (referred to herein as "EHT-LTFs 372," although they may be structured as, and carry version-dependent information for, other wireless communication protocol versions beyond EHT). Like L-STF 358, L-LTF 360, and L-SIG 362, the information in U-SIG 366 and EHT-SIG 368 may be duplicated and transmitted in each of the component 20 MHz channels in instances involving the use of a bonded channel. In some implementations, EHT-SIG 368 may additionally or alternatively carry information in one or more non-primary 20 MHz channels that is different than the information carried in the primary 20 MHz channel.

EHT-SIG 368 may include one or more jointly encoded symbols and may be encoded in a different block from the block in which U-SIG 366 is encoded. EHT-SIG 368 may be used by an AP to identify and inform multiple STAs 104 that the AP has scheduled UL or DL resources for them. EHT-SIG 368 may be decoded by each compatible STA 104 served by the AP 102. EHT-SIG 368 may generally be used by a receiving device to interpret bits in the data field 374. For example, EHT-SIG 368 may include RU allocation information, spatial stream configuration information, and peruser signaling information such as MCSs, among other examples. EHT-SIG 368 may further include a cyclic redundancy check (CRC) (for example, four bits) and a tail (for example, 6 bits) that may be used for binary convolutional code (BCC). In some implementations, EHT-SIG 368 may include one or more code blocks that each include a CRC and a tail. In some aspects, each of the code blocks may be encoded separately.

EHT-SIG 368 may carry STA-specific scheduling information such as, for example, user-specific MCS values and user-specific RU allocation information. EHT-SIG 368 may generally be used by a receiving device to interpret bits in the data field 374. In the context of DL MU-OFDMA, such information enables the respective STAs 104 to identify and decode corresponding RUs in the associated data field 376. Each EHT-SIG 368 may include a common field and at least one user-specific field. The common field can indicate RU distributions to multiple STAs 104, indicate the RU assignments in the frequency domain, indicate which RUs are allocated for MU-MIMO transmissions and which RUs correspond to MU-OFDMA transmissions, and the number of users in allocations, among other examples. The common field may be encoded with common bits, CRC bits, and tail bits. The user-specific fields are assigned to particular STAs 104 and may be used to schedule specific RUs and to indicate the scheduling to other WLAN devices. Each user-specific field may include multiple user block fields. Each user block field may include, for example, two user fields that contain information for two respective STAs to decode their respective RU payloads.

The presence of RL-SIG 364 and U-SIG 366 may indicate to EHT- or later version-compliant STAs 104 that the PDU carrying the PHY preamble 350 is an EHT PPDU or a PPDU conforming to any later (post-EHT) version of a new wireless communication protocol conforming to a future IEEE 802.11 wireless communication protocol standard. For example, U-SIG 366 may be used by a receiving device to interpret bits in one or more of EHT-SIG 368 or the data field 374.

Access to the shared wireless medium is generally governed by a distributed coordination function (DCF). With a DCF, there is generally no centralized master device allocating time and frequency resources of the shared wireless medium. On the contrary, before a wireless communication device, such as an AP 102 or a STA 104, is permitted to transmit data, it must wait for a particular time and then contend for access to the wireless medium. In some implementations, the wireless communication device may be configured to implement the DCF through the use of carrier sense multiple access (CSMA) with collision avoidance (CA) (CSMA/CA) techniques and timing intervals. Before transmitting data, the wireless communication device may perform a clear channel assessment (CCA) and determine that the appropriate wireless channel is idle. The CCA includes both physical (PHY-level) carrier sensing and virtual (MAC-level) carrier sensing. Physical carrier sensing (or packet detection (PD)) is accomplished via a measurement of the received signal strength of a valid frame, which is then compared to a value to determine whether the channel is busy. For example, if the received signal strength of a detected preamble is above the value, the medium is considered busy. Physical carrier sensing also includes energy detection (ED). Energy detection involves measuring the total energy the wireless communication device receives regardless of whether the received signal represents a valid frame. If the total energy detected is above a value, the medium is considered busy. Virtual carrier sensing is accomplished via the use of a network allocation vector (NAV), an indicator of a time when the medium may next become idle. The NAV is reset each time a valid frame is received that is not addressed to the wireless communication device. The NAV effectively serves as a time duration that must elapse before the wireless communication device may contend for access even in the absence of a detected symbol or even if the detected energy is below the value.

As described above, the DCF is implemented through the use of time intervals. These time intervals include the slot time (or "slot interval") and the interframe space (IFS). The slot time is the basic unit of timing and may be determined based on one or more of a transmit-receive turnaround time, a channel sensing time, a propagation delay, and a MAC processing time. Measurements for channel sensing are performed for each slot. All transmissions may begin at slot boundaries. Example varieties of IFS include: the short IFS (SIFS), the distributed IFS (DIFS), the extended IFS (EIFS), or the arbitration IFS (AIFS). For example, the DIFS may be defined as the sum of the SIFS and two times the slot time. The values for the slot time and IFS may be provided by a suitable standard specification, such as one of the IEEE 802.11 family of wireless communication protocol standards (such as that defined by the IEEE 802.11-2016 specification or amendments thereof including, but not limited to, 802.11ah, 802.11ad, 802.11ay, 802.11ax, 802.11az, 802.11ba, and 802.11be).

When the NAV reaches 0, the wireless communication device performs physical carrier sensing. If the channel remains idle for the appropriate IFS (for example, a DIFS), the wireless communication device initiates a backoff timer, which represents a duration of time that the device must sense the medium to be idle before it is permitted to transmit. The backoff timer is decremented by one slot each time the medium is sensed to be idle during a corresponding slot interval. If the channel remains idle until the backoff timer expires, the wireless communication device becomes the holder (or "owner") of a transmit opportunity (TXOP) and may begin transmitting. The TXOP is the duration of time the wireless communication device can transmit frames over the channel after it has won contention for the wireless medium. If, on the other hand, one or more of the carrier sense mechanisms indicate that the channel is busy, a MAC controller within the wireless communication device will not permit transmission.

Each time the wireless communication device generates a new PPDU for transmission in a new TXOP, it randomly selects a new backoff timer duration. The available distribution of numbers that may be randomly selected for the backoff timer is referred to as the contention window (CW). If, when the backoff timer expires, the wireless communication device transmits the PPDU, but the medium is still busy, there may be a collision. Additionally, if there is otherwise too much energy on the wireless channel resulting in a poor signal-to-noise ratio (SNR), the communication may be corrupted or otherwise not successfully received. In such instances, the wireless communication device may not receive a communication acknowledging the transmitted PDU within a timeout interval. The MAC may then increase the CW exponentially, for example, doubling it, and randomly select a new backoff timer duration from the CW before each attempted retransmission of the PPDU. Before each attempted retransmission, the wireless communication device may wait a duration of DIFS and, if the medium remains idle, proceed to initiate the new backoff timer.

As described above, APs 102 and STAs 104 can support multi-user (MU) communications; that is, concurrent transmissions from one device to each of multiple devices (for example, multiple simultaneous downlink (DL) communications from an AP 102 to corresponding STAs 104), or concurrent transmissions from multiple devices to a single device (for example, multiple simultaneous uplink (UL) transmissions from corresponding STAs 104 to an AP 102). To support the MU transmissions, the APs 102 and STAs 104 may utilize multi-user multiple-input, multiple-output (MU-MIMO) and multi-user orthogonal frequency division multiple access (MU-OFDMA) techniques.

In MU-OFDMA schemes, the available frequency spectrum of the wireless channel may be divided into multiple resource units (RUs) each including a number of different frequency subcarriers ("tones"). Different RUs may be allocated or assigned by an AP 102 to different STAs 104 at particular times. The sizes and distributions of the RUs may be referred to as an RU allocation. In some implementations, RUs may be allocated in 2 MHz intervals, and as such, the smallest RU may include 26 tones consisting of 24 data tones and 2 pilot tones. Consequently, in a 20 MHz channel, up to 9 RUs (such as 2 MHz, 26-tone RUs) may be allocated (because some tones are reserved for other purposes). Similarly, in a 160 MHz channel, up to 74 RUs may be allocated. Larger 52 tone, 106 tone, 242 tone, 484 tone and 996 tone RUs may also be allocated. Adjacent RUs may be separated by a null subcarrier (such as a DC subcarrier), for example, to reduce interference between adjacent RUs, to reduce receiver DC offset, and to avoid transmit center frequency leakage.

For UL MU transmissions, an AP 102 can transmit a trigger frame to initiate and synchronize an UL MU-OFDMA or UL MU-MIMO transmission from multiple STAs 104 to the AP 102. Such trigger frames may thus enable multiple STAs 104 to send UL traffic to the AP 102 concurrently in time. A trigger frame may address one or more STAs 104 through respective association identifiers (AIDs), and may assign each AID (and thus each STA 104) one or more RUs that can be used to send UL traffic to the AP 102. The AP also may designate one or more random access (RA) RUs that unscheduled STAs 104 may contend for.

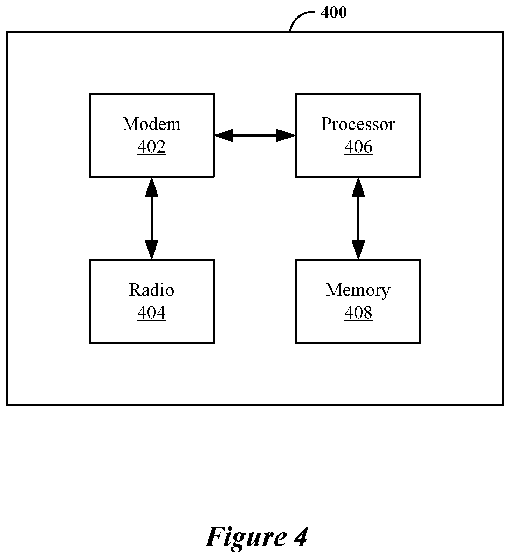

Figure 4 shows a block diagram of an example wireless communication device 400. In some implementations, the wireless communication device 400 can be an example of a device for use in a STA such as one of the STAs 104 described above with reference to Figure 1. In some other implementations, the wireless communication device 400 can be an example of a device for use in an AP such as the AP 102 described above with reference to Figure 1. In some other implementations, the wireless communication device 400 can include a processing system and an interface configured to perform the described functions.

The wireless communication device 400 is capable of transmitting (or outputting for transmission) and receiving wireless communications (for example, in the form of wireless packets). For example, the wireless communication device can be configured to transmit and receive packets in the form of physical layer convergence protocol (PLCP) protocol data units (PPDUs) and medium access control (MAC) protocol data units (MPDUs) conforming to an IEEE 802.11 standard, such as that defined by the IEEE 802.11-2016 specification or amendments thereof including, but not limited to, 802.11ah, 802.11ad, 802.11ay, 802.11ax, 802.11az, 802.11ba, and 802.11be.

The wireless communication device 400 can be, or can include, a chip, system on chip (SoC), chipset, package, or device that includes one or more modems 402, for example, a Wi-Fi (IEEE 802.11 compliant) modem. In some implementations, the one or more modems 402 (collectively "the modem 402") additionally include a WWAN modem (for example, a 3GPP 4G LTE or 5G NR compliant modem). In some implementations, the wireless communication device 400 also includes one or more radios 404 (collectively "the radio 404"). In some implementations, the wireless communication device 400 further includes one or more processors, processing blocks or processing elements 406 (collectively "the processor 406"), and one or more memory blocks or elements 408 (collectively "the memory 408").

The modem 402 can include an intelligent hardware block or device such as, for example, an application-specific integrated circuit (ASIC) among other possibilities. The modem 402 is generally configured to implement a PHY layer. For example, the modem 402 is configured to modulate packets and to output the modulated packets to the radio 404 for transmission over the wireless medium. The modem 402 is similarly configured to obtain modulated packets received by the radio 404 and to demodulate the packets to provide demodulated packets. In addition to a modulator and a demodulator, the modem 402 may further include digital signal processing (DSP) circuitry, automatic gain control (AGC), a coder, a decoder, a multiplexer, and a demultiplexer. For example, while in a transmission mode, data obtained from the processor 406 is provided to a coder, which encodes the data to provide encoded bits. The encoded bits are mapped to points in a modulation constellation (using a selected MCS) to provide modulated symbols. The modulated symbols may be mapped to a number *N_{SS}* of spatial streams or a number *N_{STS}* of space-time streams. The modulated symbols in the respective spatial or space-time streams may be multiplexed, transformed via an inverse fast Fourier transform (IFFT) block, and subsequently provided to the DSP circuitry for Tx windowing and filtering. The digital signals may be provided to a digital-to-analog converter (DAC). The resultant analog signals may be provided to a frequency upconverter, and ultimately, the radio 404. In implementations involving beamforming, the modulated symbols in the respective spatial streams are precoded via a steering matrix prior to their provision to the IFFT block.

While in a reception mode, digital signals received from the radio 404 are provided to the DSP circuitry, which is configured to acquire a received signal, for example, by detecting the presence of the signal and estimating the initial timing and frequency offsets. The DSP circuitry is further configured to digitally condition the digital signals, for example, using channel (narrowband) filtering, analog impairment conditioning (such as correcting for I/Q imbalance), and applying digital gain to ultimately obtain a narrowband signal. The output of the DSP circuitry may be fed to the AGC, which is configured to use information extracted from the digital signals, for example, in one or more received training fields, to determine an appropriate gain. The output of the DSP circuitry also is coupled with the demodulator, which is configured to extract modulated symbols from the signal and, for example, compute the logarithm likelihood ratios (LLRs) for each bit position of each subcarrier in each spatial stream. The demodulator is coupled with the decoder, which may be configured to process the LLRs to provide decoded bits. The decoded bits from all of the spatial streams are fed to the demultiplexer for demultiplexing. The demultiplexed bits may be descrambled and provided to the MAC layer (the processor 406) for processing, evaluation, or interpretation.

The radio 404 generally includes at least one radio frequency (RF) transmitter (or "transmitter chain") and at least one RF receiver (or "receiver chain"), which may be combined into one or more transceivers. For example, the RF transmitters and receivers may include various DSP circuitry including at least one power amplifier (PA) and at least one low-noise amplifier (LNA), respectively. The RF transmitters and receivers may in turn be coupled to one or more antennas. For example, in some implementations, the wireless communication device 400 can include, or be coupled with, multiple transmit antennas (each with a corresponding transmit chain) and multiple receive antennas (each with a corresponding receive chain). The symbols output from the modem 402 are provided to the radio 404, which transmits the symbols via the coupled antennas. Similarly, symbols received via the antennas are obtained by the radio 404, which provides the symbols to the modem 402.

The processor 406 can include one or more intelligent hardware blocks or devices including (but not limited to) processing cores, processing blocks, central processing units (CPUs), graphics processing units (GPUs), microprocessors, microcontrollers, reduced instruction set computing (RISC) processors, systems on a chip (SoCs), baseband processors, digital signal processors (DSPs), application-specific integrated circuits (ASICs), programmable logic devices (PLDs) such as field programmable gate arrays (FPGAs), state machines, gated logic, discrete hardware circuits, or any combination thereof designed or configured to perform the functions described herein. The processor 406 processes information received through the radio 404 and the modem 402, and processes information to be output through the modem 402 and the radio 404 for transmission through the wireless medium. For example, the processor 406 may implement a control plane and MAC layer configured to perform various operations related to the generation and transmission of MPDUs, frames, or packets. The MAC layer is configured to perform or facilitate the coding and decoding of frames, spatial multiplexing, space-time block coding (STBC), beamforming, and OFDMA resource allocation, among other operations or techniques. In some implementations, the processor 406 may generally control the modem 402 to cause the modem to perform various operations described above.

The memory 408 can include tangible storage media such as random-access memory (RAM) or read-only memory (ROM), or combinations thereof. The memory 408 also can store non-transitory processor- or computer-executable software (SW) code containing instructions that, when executed by the processor 406, cause the processor 406 to perform various operations described herein for wireless communication, including the generation, transmission, reception, and interpretation of MPDUs, frames or packets. For example, various functions of components disclosed herein, or various blocks or steps of a method, operation, process, or algorithm disclosed herein, can be implemented as one or more modules of one or more computer programs.

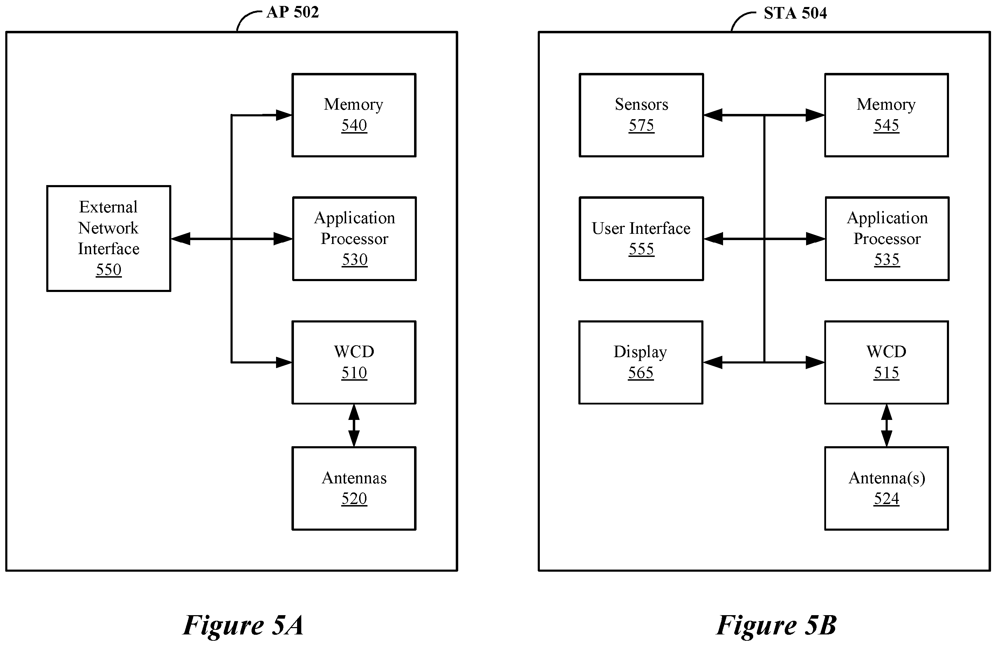

Figure 5A shows a block diagram of an example AP 502. For example, the AP 502 can be an example implementation of the AP 102 described with reference to Figure 1. The AP 502 includes a wireless communication device (WCD) 510. For example, the wireless communication device 510 may be an example implementation of the wireless communication device 400 described with reference to Figure 4. The AP 502 also includes multiple antennas 520 coupled with the wireless communication device 510 to transmit and receive wireless communications. In some implementations, the AP 502 additionally includes an application processor 530 coupled with the wireless communication device 510, and a memory 540 coupled with the application processor 530. The AP 502 further includes at least one external network interface 550 that enables the AP 502 to communicate with a core network or backhaul network to gain access to external networks including the Internet. For example, the external network interface 550 may include one or both of a wired (for example, Ethernet) network interface and a wireless network interface (such as a WW AN interface). Any of the aforementioned components can communicate with other components directly or indirectly, over at least one bus. The AP 502 further includes a housing that encompasses the wireless communication device 510, the application processor 530, the memory 540, and at least portions of the antennas 520 and external network interface 550.

Figure 5B shows a block diagram of an example STA 504. For example, the STA 504 can be an example implementation of the STA 104 described with reference to Figure 1. The STA 504 includes a wireless communication device 515. For example, the wireless communication device 515 may be an example implementation of the wireless communication device 400 described with reference to Figure 4. The STA 504 also includes one or more antennas 525 coupled with the wireless communication device 515 to transmit and receive wireless communications. The STA 504 additionally includes an application processor 535 coupled with the wireless communication device 515, and a memory 545 coupled with the application processor 535. In some implementations, the STA 504 further includes a user interface (UI) 555 (such as a touchscreen or keypad) and a display 565, which may be integrated with the UI 555 to form a touchscreen display. In some implementations, the STA 504 may further include one or more sensors 575 such as, for example, one or more inertial sensors, accelerometers, temperature sensors, pressure sensors, or altitude sensors. Ones of the aforementioned components can communicate with other ones of the components directly or indirectly, over at least one bus. The STA 504 further includes a housing that encompasses the wireless communication device 515, the application processor 535, the memory 545, and at least portions of the antennas 525, UI 555, and display 565. In some other implementations, the STA 504 may include a processing system and an interface configured to perform the described functions.

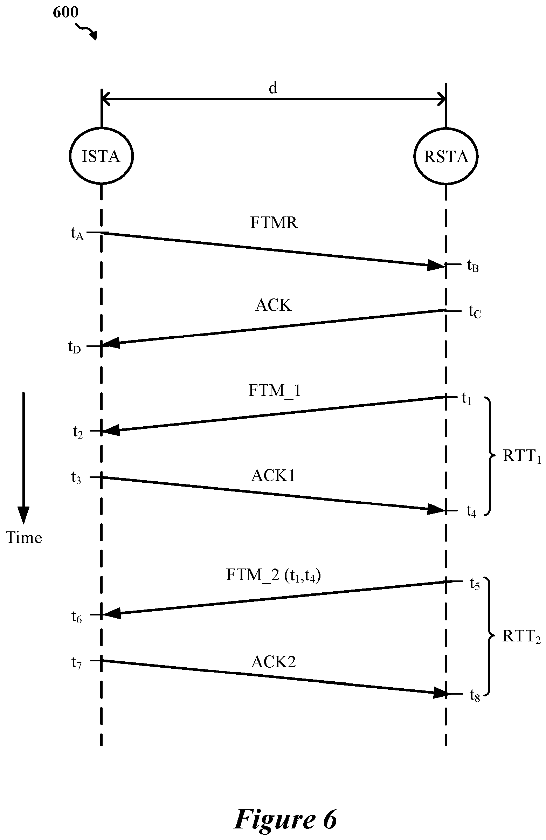

Figure 6 shows a sequence diagram of an example ranging operation 600. The example ranging operation 600 is performed between an initiator device (ISTA) and a responder device (RSTA) using an FTM session in accordance with the IEEE 802.11REVmd standards. The ISTA and the RSTA may each be, for example, an access point, a wireless station, or another suitable wireless device. At time t_{A}, the ISTA transmits an FTM Request (FTMR) frame to the RSTA. The FTMR frame includes a request for an FTM session with the RSTA, and may also include information such as (but not limited to) device capabilities, ranging parameters, preferred bandwidths, and so on. The RSTA receives the FTMR frame at time t_{B}, and responds by sending an ACK frame to the ISTA at time t_{C}. The ACK frame may acknowledge acceptance of the requested FTM session, and may signal the beginning of a measurement phase. The RSTA receives the ACK frame at time t_{D}.

At time t₁, a measurement phase begins during which the RSTA and the ISTA exchange measurement frames from which one or more RTTs can be determined. Specifically, at time t₁, the RSTA transmits an FTM_1 frame to the ISTA, and captures the TOD of the FTM_1 frame as time t₁. The ISTA receives the FTM_1 frame at time t₂, and captures the TOA of the FTM_1 frame as time t₂. The ISTA transmits an ACK1 frame to the RSTA at time t₃, and captures the TOD of the ACK1 frame as time t₃. The RSTA receives the ACK1 frame at time t₄, and captures the TOA of the ACK1 frame as time t₄. After time t₄, the RSTA has timestamps for times t₁ and t₄, and the ISTA has timestamps for times t₂ and t₃.

In some implementations, the RSTA may provide the t₁ and t₄ timestamps to the ISTA, and the ISTA can determine the RTT of the FTM_1 and ACK1 frames. For example, at time t₅, the RSTA transmits an FTM_2 frame containing or indicating the captured timestamps for times t₁ and t₄. The ISTA receives the FTM_2 frame at time t₆, and obtains the t₁ and t₄ timestamps captured by the RSTA. The ISTA may determine the RTT between the ISTA and the RSTA as RTT₁ = (t₄ - t₃) + (t₂ - t₁), and may determine the distance between the ISTA and the RSTA as RTT₁*c/2, where c is the speed of light. In other implementations, the ISTA can provide the t₂ and t₃ timestamps to the RSTA, and the RSTA can determine RTT₁ = (t₄ - t₃) + (t₂ - t₁).

The example ranging operation 600 may continue for any suitable number of FTM sessions between the ISTA and the RSTA. For example, after capturing a timestamp for the TOA of the FTM_2 frame as time t₆, the ISTA may transmit an ACK2 frame to the RSTA at time t₇, and may capture time t₇ as the TOD of the ACK2 frame. The RSTA receives the ACK2 frame at time t₈, and captures the TOA of the ACK2 frame as time t₈. The captured timestamps for t₅, t₆, t₇, and t₈ can be used to determine a second RTT between the ISTA and the RSTA, for example, as RTT₂ = (t₈ - t₇) + (t₆ - t₅). In some instances, the RSTA can send or indicate the timestamps for t₅ and t₈ to the ISTA, and the ISTA can determine RTT₂. In other instances, the ISTA can send or indicate the timestamps for t₆ and t₇ to the RSTA, and the RSTA can determine RTT₂.

As discussed, wireless devices typically use the same clock or reference oscillator to generate carrier signals for data transmissions and receptions and to capture timestamps of the data transmissions and receptions. For example, referring to Figure 6, the RSTA uses the same clock or reference oscillator to generate carrier signals for transmitting the FTM_1 frame and to capture the TOD timestamp of the FTM_1 frame (at time t₁), and the ISTA uses the same clock or reference oscillator to generate carrier signals for receiving the FTM_1 frame and to capture the TOA timestamp of the FTM_1 frame (at time t₂). Similarly, the ISTA uses the same clock or reference oscillator to generate carrier signals for transmitting the ACK1 frame and to capture the TOD timestamp of the ACK1 frame (at time t₃), and the RSTA uses the same clock or reference oscillator to generate carrier signals for receiving the ACK1 frame and to capture the TOA timestamp of the ACK1 frame (at time t₄).

Clock drift between the ISTA and the RSTA may cause misalignments or offsets between the timestamps captured by the RSTA (e.g., t₁, t₄, t₅, and t₈) and the timestamps captured by the ISTA (e.g., t₂, t₃, t₆, and t₇). These timestamp misalignments can cause ranging errors when determining the distance between the RSTA and the ISTA based on RTT values (such as RTT₁ and/or RTT₂). Frequency offsets between the RSTA and the ISTA can decrease the speed and accuracy with which one or both of the RSTA and the ISTA can receive and successfully decode FTM frames from one another, which may exacerbate offsets between the timestamps captured by the RSTA and the ISTA. Moreover, clock and frequency offsets between the RSTA and the ISTA become larger as the operating temperature of one or both the RSTA or the ISTA increases. As a result, ranging errors between the RSTA and the ISTA also increase as the operating temperature of one or both the RSTA or the ISTA increases.

The IEEE 802.11 family of wireless communication standards specify a maximum clock drift or frequency offset of +/- 20 ppm for operating temperatures between -30°C and +85°C. Thus, in a ranging operation or FTM session between an ISTA having a frequency offset of -20 ppm and an RSTA having a frequency offset of +20 ppm, the overall frequency offset between the ISTA and the RSTA can be as much as 40 ppm. For example, when the ranging frames in an FTM session have a duration of 100 microseconds (µs), then a frequency offset of 40 ppm corresponds to 4 nanoseconds (ns) in time, which when multiplied by the speed of light results in a ranging error of approximately 4 feet. By comparison, a frequency offset of 20 ppm corresponds to 2 ns in time based on ranging frames having a duration of 100 µs, which when multiplied by the speed of light results in a ranging error of approximately 2 feet. For another example, a frequency offset of 100 ppm corresponds to 10 ns in time based on ranging frames having a duration of 100 µs, which when multiplied by the speed of light results in a ranging error of approximately 3 meters. Moreover, increases in the duration of ranging frames may exacerbate ranging errors caused by clock offset.

As discussed, when the RSTA's clock is stable relative to the ISTA's clock (e.g., such that the RSTA's clock maintains a constant or near-constant oscillation frequency while the ISTA's clock drifts), the ISTA can use the estimated CFO between the ISTA and the RSTA to align its clock with the RSTA's clock. However, when the RSTA's clock drifts while the ISTA's clock remains stable (e.g., such that the ISTA's clock maintains a constant or near-constant oscillation frequency while the RSTA's clock drifts), aligning the ISTA's clock with the RSTA's clock may cause even larger ranging errors. Accordingly, techniques are disclosed herein that can be used to minimize ranging errors resulting from clock drift and frequency offsets between ranging devices (e.g., such as an RSTA and an ISTA). In some implementations, wireless devices employing one or more of the techniques disclosed herein can avoid participating in ranging operations associated with certain levels of ranging errors. In this way, the wireless devices can not only achieve greater overall ranging accuracies (e.g., by not participating in ranging operations having unacceptably high ranging errors), but can also save power and reduce congestion on a shared wireless medium (e.g., by not repeatedly transmitting ranging requests that will be denied due to the responder device's operating temperature).

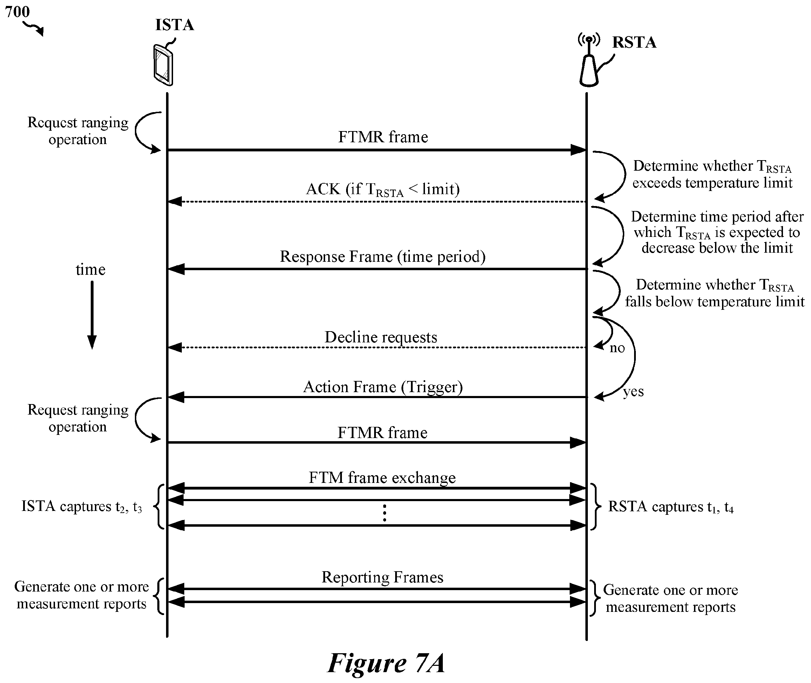

Figure 7A shows a sequence diagram of an example ranging operation 700, according to some implementations. The ranging operation 700 may be performed between an ISTA and an RSTA using one or more FTM sessions. In some instances, the ranging operation 700 may be performed in accordance with the IEEE 802.11REVmd specification. In some implementations, the RSTA may be an AP such as the AP 102 of Figure 1 or the AP 502 of Figure 5A, and the ISTA may be a wireless station such as the STA 104 of Figure 1 or the STA 504 of Figure 5B. In other implementations, the RSTA may be a wireless station, and the ISTA may be an access point. Further, although only one ISTA and one RSTA are shown in the example of Figure 7A, in some other implementations, other numbers of ISTAs and/or RSTAs may participate in the ranging operation 700.

The ranging operation 700 begins with the ISTA transmitting an FTMR frame to the RSTA. The FTMR frame may request the RSTA to initiate one or more FTM sessions between the ISTA and the RSTA. In some aspects, the FTMR frame may request the RSTA to report measurements obtained or determined during the one or more FTM sessions to the ISTA. The FTMR frame may also include capability information, FTM parameters, preferred bandwidths, and other information pertaining to the ISTA and/or to the requested FTM sessions. The RSTA receives the FTMR frame, and obtains the capability information, FTM parameters, preferred bandwidths, and other information contained in the FTMR frame.

In various implementations, the RSTA may determine whether its operating temperature exceeds a threshold before responding to the FTMR frame. When the RSTA's temperature is less than the threshold, the RSTA may transmit an ACK frame indicating acceptance of the request to the ISTA. Then, after contending for channel access (e.g., using CCA, EDCA, or some other suitable channel access mechanism) and obtaining a TXOP on the wireless medium, the RSTA may exchange measurement frames with the ISTA in one or more FTM sessions, for example, in a manner similar to that described with reference to Figure 6.

When the RSTA's temperature exceeds the threshold, the RSTA may decline or postpone the requested FTM sessions (e.g., the remainder of the ranging operation 700) and determine a time period after which its operating temperature is expected to decrease below the threshold. In some instances, the temperature threshold may correspond to a particular frequency accuracy such as (but not limited to) the +/- 20 ppm accuracy specified by the IEEE 802.11 family of wireless communications standards. In some other instances, the temperature threshold may correspond to a maximum acceptable ranging error resulting from clock drift and/or frequency offsets between the RSTA and the one or more ISTAs. As depicted in Figure 7A, the RSTA determines that its temperature exceeds the threshold, and determines the time period after which its temperature is expected to fall below the threshold. In some instances, the determined time period may indicate a number of beacon intervals during which the ISTA is to refrain from transmitting FTMR frames to the RSTA (or otherwise initiating ranging operations with the RSTA). In other instances, the time period may be estimated. In some other instances, the time period may be predefined (e.g., 2 minutes, 5 minutes, 10 minutes, and so on), or may be obtained from another device. In one implementation, the time period may be selected from a plurality of back-off times or durations, for example, in response to the current temperature of the RSTA.

The RSTA may embed the determined time period (or an indication based on the determined time period) into a response frame, and transmit the response frame to the ISTA. In some instances, the response frame may be a unicast frame transmitted to the initiator device. In other instances, the response frame may be a multicast frame transmitted to the initiator device and one or more other wireless communication devices. In some other instances, the response frame may be a broadcast frame. Because broadcast frames are intended for all wireless communication devices within range of the RSTA, transmitting the response frame as a broadcast frame may cause all such wireless communication devices to refrain from attempting to access the wireless medium.

In one implementation, the RSTA may transmit the response frame when the determined time period is less than a value, and may refrain from transmitting the response frame when the determined time period is greater than or equal to the value. The value, which may be set to any suitable duration of time, may be used to indicate that the RSTA is not available for ranging operations (e.g., rather than sending or broadcasting the determined time period).

In one implementation, the RSTA may also embed an indications of its temperature into the response frame. In some implementations, the determined time period can be indicated by a timer included in an information element (IE) of the response frame. For example, the determined time period may be represented by a comeback timer contained in a vendor-specific information element (VSIE) of an FTM_1 frame. In one implementation, the temperature of the RSTA may be indicated by one or both of a TOA error field or a TOD error field of the FTM_1 frame. In some instances, one or both of the TOA error field or the TOD error field may be set to a predetermined value indicating that the RSTA's temperature exceeds the threshold. For example, the bit values contained in one or both of the TOA error field or the TOD error field may be set to all "1's" (or alternatively to all "0's") to indicate that the temperature of the responder device is above the threshold.

The ISTA receives the response frame transmitted from the RSTA, and obtains the determined time period. In some implementations, the ISTA may determine that the RSTA is unable to meet a certain ranging accuracy based on one or both of the RSTA's temperature or the determined time period, and may refrain from requesting ranging operations from the RSTA during the determined time period. In some instances, the ISTA may refrain from requesting ranging operations for an indicated number of beacon intervals. In addition, the RSTA may decline requests for ranging operations during the determined time period (e.g., from the ISTA and other nearby wireless devices). In this way, the ISTA may not only avoid participating in ranging operations that do not meet certain ranging accuracies, but may also save power consumption associated with transmitting FTMR frames to the RSTA. The ability to save power consumption when the RSTA's temperature exceeds the threshold may be especially beneficial for low-power wireless devices such as (but not limited to) smart watches and IoT devices.

The RSTA may continue monitoring its temperature, either periodically or randomly, to determine when its temperature falls below the threshold. In some instances, the RSTA may continue declining ranging requests as long as its temperature exceeds the threshold. When the responder device's temperature decreases below the threshold, which may indicate that ranging errors resulting from clock drift or frequency offsets become less than the certain amount, the RSTA may accept subsequent requests for ranging operations. In some implementations, the RSTA may solicit ranging requests from the ISTA in response to its temperature decreasing below the threshold. For example, the RSTA may transmit an action frame which triggers the ISTA to request a ranging operation (e.g., by transmitting an FTMR frame to the RSTA). The action frame may be a trigger frame, an LMR frame, or a vendor action frame.

In response to receiving the action frame which may identify the ISTA, the ISTA transmits another FTMR frame to the RSTA. The RSTA receives the FTMR frame, and determines that its operating temperature is below the threshold. Then, after a duration (e.g., a DIFS duration), the RSTA initiates one or more FTM sessions between the ISTA and the RSTA. For example, in a first FTM frame exchange, the RSTA may capture timestamps for t₁ and t₄, and the ISTA may capture timestamps for t₂ and t₃. In one implementation, the FTM sessions of Figure 7A may be performed in a manner similar to that described with reference to the ranging operation 600 of Figure 6.

In various implementations, the RSTA can generate one or more measurement reports containing or indicating timestamps and other measurements obtained during the FTM sessions, and can transmit the measurement reports to the ISTA in one or more reporting frames. In some instances, the reporting frames can be or include location measurement reports (LMRs). For example, in one implementation, the reporting frames can be responder-to-initiator (R2I) LMRs. Similarly, the ISTA can generate one or more measurement reports containing or indicating timestamps and other measurements obtained during the FTM sessions, and can transmit the measurement reports to the RSTA in one or more reporting frames. In some instances, the reporting frames can be or include LMRs. For example, in one implementation, the reporting frames can be initiator-to-responder (I2R) LMRs.

In some implementations, determination of the time period may be based on the temperature of the RSTA, an amount of time that the temperature of the RSTA has exceeded the threshold, one or more other time periods previously determined for one or more temperatures of the RSTA that exceeded the threshold, a correlation between temperatures of the RSTA and ranging errors resulting from clock drift and/or frequency offsets between the RSTA and the ISTA, an amount of queued data in the RSTA, the number and size of active traffic flows handled by the RSTA, or any combination thereof. For example, if historical data indicates that it takes approximately 20 minutes for the temperature of the RSTA to decrease from its current level to a temperature that is below the threshold, then the RSTA may use 20 minutes as an estimate of determined time period.

Continuing with the example, if the RSTA has a relatively large number of active traffic flows (such as more than a specified number), the RSTA may select a time period that is greater than 20 minutes, for example, based on an expected power consumption and heat dissipation associated with processing the relatively large number of active traffic flows. Conversely, if the RSTA has a relatively small number of active traffic flows (such as less than the specified number), or does not have any active traffic flows, the RSTA may select a shorter time period, for example, based on the ability of the RSTA to dissipate heat and thus decrease its operating temperature when processing the relatively small number of active traffic flows (or no active traffic flows).

By declining or postponing ranging requests when its operating temperature exceeds the threshold, the RSTA may avoid participating in ranging operations likely to have unacceptable ranging errors resulting from clock drift and frequency offsets. In this way, the RSTA can improve the overall accuracy of ranging operations by employing various techniques disclosed herein. In addition, the ability of the RSTA to decline or postpone ranging requests when its operating temperature exceeds the threshold may allow the ISTA to reduce power consumption, for example, by refraining from requesting ranging operations that will be declined or postponed by the RSTA.

In various implementations, the temperature threshold of the RSTA can be selected or determined based on a specified ranging accuracy and/or a certain range of operating temperatures. For example, if the acceptable ranging errors of a particular ranging operation are greater than the maximum ranging errors specified by a wireless communications standard, the RSTA may select a relatively high temperature threshold (e.g., to allow for greater ranging errors than those specified in the wireless communications standards). Conversely, if the acceptable ranging errors of a particular ranging operation are less than the maximum ranging errors specified by the wireless communications standard, the RSTA may select a relatively low temperature threshold (e.g., to reduce ranging errors to levels below those specified in the wireless communications standards).

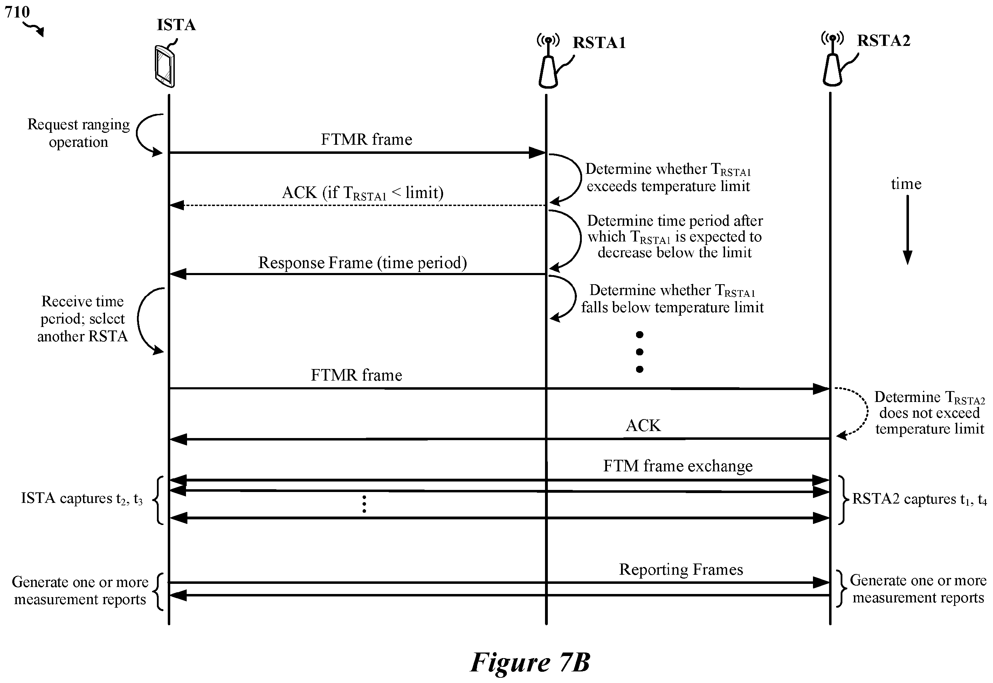

Figure 7B shows a sequence diagram of an example ranging operation 710, according to other implementations. The ISTA initiates the ranging operation 710 by transmitting an FTMR frame to a first responder device (RSTA1). In some instances, the ISTA may be one example of the ISTA of Figure 7A, and RSTA1 may be one example of the RSTA of Figure 7A. The FTMR frame may request RSTA1 to initiate one or more FTM sessions, may request RSTA1 to report measurements obtained or determined during the one or more FTM sessions to the ISTA, may include capability information, FTM parameters, preferred bandwidths, and other information pertaining to the ISTA and/or to the requested FTM sessions, or any combination thereof. RSTA1 receives the FTMR frame, and obtains the capability information, FTM parameters, preferred bandwidths, and other information contained in the FTMR frame.

As discussed, RSTA1 may determine whether its operating temperature exceeds a threshold before responding to the FTMR frame. In the example of Figure 7B, the temperature of RSTA1 exceeds the temperature threshold. In response thereto, RSTA1 determines the time period, and transmits a response frame (such as an FTM action frame) indicating the determined time period to the ISTA. The ISTA receives the response frame transmitted from RSTA1, and obtains the determined time period. In various implementations, the ISTA may determine that RSTA1 is unable to meet certain ranging requirements based on the determined time period, and may select another responder device with which to perform a ranging operation. As shown, the ISTA initiates a separate ranging operation with a second responder device (RSTA2) by transmitting an FTMR frame to RSTA2. In some instances, RSTA2 may be another example of the RSTA of Figure 7A.

RSTA2 receives the FTMR frame, and obtains capability information, FTM parameters, preferred bandwidths, and other information provided by the ISTA. RSTA2 determines that its temperature does not exceed the temperature threshold, and transmits an ACK frame to ISTA. The ACK frame may indicate acceptance of the ranging request by the ISTA. After contending for channel access and obtaining a TXOP on the wireless medium, RSTA2 may perform the ranging operation with the ISTA by exchanging measurement frames and reporting frames with the ISTA, for example, as described with reference to Figure 7A.

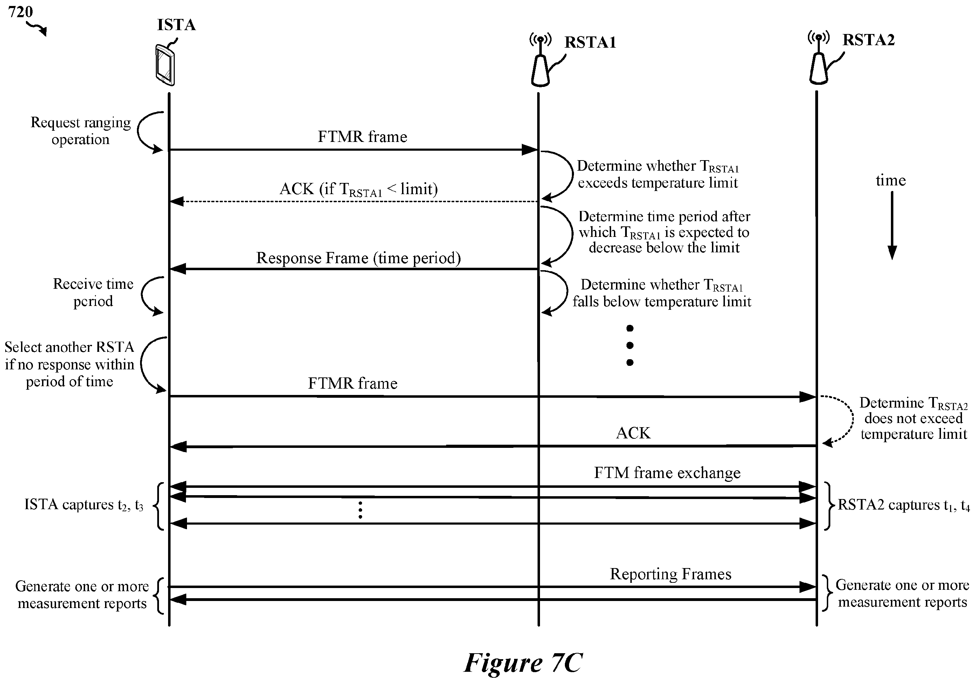

Figure 7C shows a sequence diagram of an example ranging operation 720, according to some other implementations. The ranging operation 720 is similar to the ranging operation 700B of Figure 7B, except that when the ISTA receives the determined time period from RSTA1 (e.g., which indicates that the temperature of RSTA1 exceeds the threshold), the ISTA may wait for a period of time and listen for a response from RSTA1. If the ISTA receives an ACK frame within the period of time, the ISTA may perform the ranging operation with RSTA1. Conversely, if the ISTA does not receive the ACK frame (or some other response from RSTA1), the ISTA may begin decrementing its back-off timer. When the back-off timer reaches zero, the ISTA may contend for channel access and initiate a ranging operation with RSTA2 by transmitting an FTMR frame to RSTA2.

RSTA2 receives the FTMR frame, and obtains capability information, FTM parameters, preferred bandwidths, and other information provided by the ISTA. RSTA2 determines that its temperature does not exceed the temperature threshold, and transmits an ACK frame to ISTA. The ACK frame may indicate acceptance of the ranging request by the ISTA. After contending for channel access and obtaining a TXOP on the wireless medium, RSTA2 may exchange measurement frames and reporting frames with the ISTA, for example, as described with reference to Figure 7A.

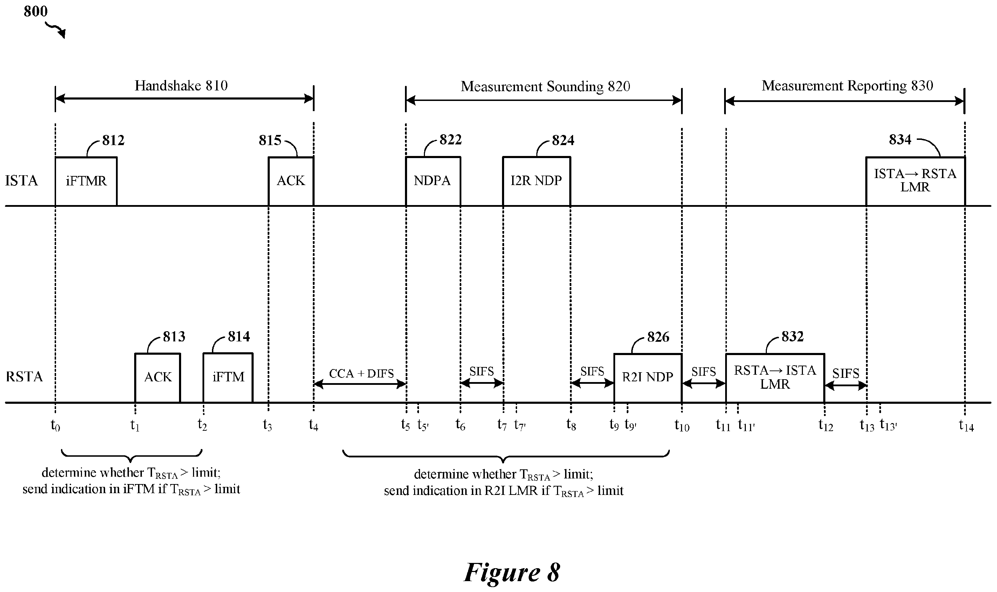

Figure 8 shows a timing diagram illustrating another example ranging operation 800, according to some other implementations. The ranging operation 800 may be performed between a responder device (RSTA) and an initiator device (ISTA). In some implementations, the RSTA may be an AP such as the AP 102 of Figure 1 or the AP 502 of Figure 5A, and the ISTA may be a wireless station such as the STA 104 of Figure 1 or the STA 504 of Figure 5B. In other implementations, the RSTA may be a wireless station, and the ISTA may be an access point. In various implementations, the example ranging operation 800 may be based at least in part on one or more of the NGP techniques described in the IEEE 802.11az standards. In one implementation, the ranging operation 800 may be associated with a non-trigger-based (NTB) ranging operation.

As shown, the example ranging operation 800 may include a handshake process 810, a measurement sounding phase 820, and a measurement reporting phase 830. The handshake process 810 may signal an intent to participate in the ranging operation 800, and also may be used by the ISTA and the RSTA to exchange capability information with one another. For example, at time t₀, the ISTA requests the ranging operation 800 by transmitting an initial Fine Timing Measurement Request (iFTMR) frame 812 to the RSTA. The iFTMR frame 812 may indicate one or more ranging parameters and/or one or more ranging capabilities of the ISTA.

In response to receiving the iFTMR frame 812, the RSTA transmits an ACK frame to the ISTA at time t₁ to acknowledge reception of the iFTMR frame 812. The RSTA transmits an initial Fine Timing Measurement (iFTM) frame 814 to the ISTA at time t₂. In some instances, the RSTA transmits the iFTM frame 814 within 10 ms of receiving the iFTMR frame 812. The ISTA receives the iFTM frame 814, and transmits an ACK frame to the RSTA at time t₃ to acknowledge reception of the iFTM frame 814. In one implementation, the iFTMR frame 812 and the iFTM frame 814 may carry FTM parameters specifying various characteristics of the ranging operation 800 (such as the supported capabilities, bandwidths, and parameters of the ISTA and the RSTA). The handshake process may end at time t₄.

In various implementations, the RSTA may monitor its operating temperature, either periodically or randomly, during the handshake process 810 to determine whether its temperature reaches or exceeds the threshold. When the RSTA's temperature exceeds the threshold, which may indicate that ranging errors resulting from clock drift or frequency offsets become less than the certain amount, the RSTA may embed indications of its temperature and the determined time period into the iFTM frame 814. In some implementations, the determined time period can be indicated by a timer included in an IE or VSIE of the iFTM frame 814. In one implementation, the temperature of the RSTA may be indicated by one or both of a TOA error field or a TOD error field of the iFTM frame 814. In some instances, one or both of the TOA error field or the TOD error field may be set to a predetermined value indicating that the RSTA's temperature exceeds the threshold. For example, the bit values contained in one or both of the TOA error field or the TOD error field may be set to all "1's" (or alternatively to all "0's") to indicate that the temperature of the responder device is above the threshold.

The ISTA receives the iFTM frame 814, and obtains the RSTA's operating temperature and the determined time period. In some implementations, the ISTA may refrain from requesting ranging operations from the RSTA during the determined time period or for an indicated number of beacon intervals. In addition, the RSTA may decline ranging requests associated with iFTMR frames during the determined time period. In this way, the ISTA may not only avoid participating in ranging operations that do not meet certain ranging accuracies, but may also save power consumption associated with transmitting iFTMR frames to the RSTA and exchanging null data packets (NDPs) with the RSTA. The ability to save power consumption when the RSTA's temperature exceeds the threshold may be especially beneficial for low-power wireless devices such as (but not limited to) smart watches and IoT devices.

The measurement sounding phase 820 may be used by the RSTA to exchange one or more sounding frames or sequences (such as Null Data Packets or NDPs) with the ISTA. For example, after contending for channel access (e.g., using CCA, EDCA, or some other suitable channel access mechanism) and obtaining a TXOP on the wireless medium, the ISTA transmits an NDP Announcement (NDPA) 822 to the RSTA at time t₅. The NDPA 822 signals to the RSTA that a NDP is to immediately follow (such as after a SIFS duration). The RSTA receives the NDPA 822 just after time t₅ (e.g., at time t_{5'}, where the time period between times t₅ and t_{5'} equals one-half of the RTT between the ISTA and RSTA), and prepares to receive the indicated NDP. At time t₇, the ISTA transmits an initiator-to-responder (I2R) NDP 824 to the RSTA. The ISTA may capture time t₇ as the TOD of the I2R NDP 824.

The RSTA receives the I2R NDP 824 just after time t₇ (e.g., at time t_{7'}, where the time period between times t₇ and t_{7'} equals one-half of the RTT between the ISTA and RSTA), and captures time t_{7'} as the TOA of the I2R NDP 824. In one implementation, the RSTA can estimate channel conditions based on the sounding sequences contained in the I2R NDP 824. The estimated channel conditions can be used to determine AoA and/or AoD information of the I2R NDP 824. At time t₉, the RSTA transmits a responder-to-initiator (R2I) NDP 826 to the ISTA, and captures time t₉ as the TOD of the R2I NDP 826.

The ISTA receives the R2I NDP 826 just after time t₉ (e.g., at time t_{9'}, where the time period between times t₉ and t_{9'} equals one-half of the RTT between the ISTA and RSTA), and captures time t_{9'} as the TOA of the R2I NDP 826. In one implementation, the ISTA can estimate channel conditions based on the sounding sequences contained in the R2I NDP 826. The estimated channel conditions can be used to determine AoA and/or AoD information of the R2I NDP 826.

In various implementations, the RSTA may monitor its operating temperature, either periodically or randomly, during the measurement sounding phase 820 to determine whether its temperature increases and exceeds the threshold. In some instances, the RSTA's operating temperature may remain below the threshold during the handshake phase 810, and increase during the measurement sounding phase 820, for example, due to power and heat dissipation associated with transmitting and receiving NDPs (or other sounding frames) to and from the ISTA. In some implementations, if the RSTA determines that its operating temperature exceeds the threshold at or before time t₁₀, the RSTA may determine a time period after which its operating temperature is expected to decrease below the threshold. The RSTA may transmit an indication of its operating temperature to the ISTA during the measurement reporting phase 830.

The measurement reporting phase 830 may be used by the RSTA and the ISTA to report measurements obtained from the ranging operation 800 to one another. For example, at time t₁₁, the RSTA transmits an R2I LMR 832 containing or indicating ranging information or feedback to the ISTA. In one implementation, the R2I LMR 832 may include or indicate the TOA of the I2R NDP 824 and the TOD of the R2I NDP 826. The ISTA receives the R2I LMR 832 just after time t₁₁ (e.g., at time t_{11'}, where the time period between times t₁₁ and t_{11'} equals one-half of the RTT between the ISTA and RSTA), and may obtain the ranging measurements contained or indicated by the R2I LMR 832. In some instances, the R2I LMR 832 may also contain or indicate the AoA of the I2R NDP 824 and/or the AoD of the R2I NDP 826.

At time t₁₃, the ISTA transmits an I2R LMR 834 containing or indicating ranging information or feedback to the RSTA. For example, the I2R LMR 834 may include or indicate the TOD of the I2R NDP 824 and the TOA of the R2I NDP 826. The RSTA receives the I2R LMR 834 just after time t₁₃ (e.g., at time t_{13'}, where the time period between times t₁₃ and t_{13'} equals one-half of the RTT between the ISTA and RSTA), and may obtain the ranging measurement contained or indicated by the I2R LMR 834. In some instances, the I2R LMR 834 may also contain or indicate the AoA of the R21 NDP 826 and/or the AoD of the I2R NDP 824. Thereafter, one or both the ISTA or the RSTA may determine one or more RTTs (and thus the distance) between the RSTA and the ISTA based on the TOAs and TODs of the I2R NDPs 824 and the R2I NDPs 826 (e.g., RTT = (t_{9'} - t₇) - (t₉ - t_{7'}).

For instances in which the RSTA determined that its operating temperature exceeded the threshold during the measurement sounding phase 820, the RSTA may configure the R2I LMR 832 to contain or indicate its operating temperature and the determined time period. In some implementations, the determined time period can be indicated by a comeback timer of the R2I LMR 832. In one implementation, the RSTA's operating temperature may be indicated by one or both of the TOA error field or the TOD error field of the R2I LMR 832. In some instances, one or both of the TOA error field or the TOD error field may be set to a predetermined value indicating that the RSTA's temperature exceeds the threshold. For example, the bit values contained in one or both of the TOA error field or the TOD error field may be set to all "1's" (or alternatively to all "0's") to indicate that the temperature of the responder device is above the threshold.

In these instances, the R2I LMR 832 transmitted to the ISTA at time t₁₁ contains or indicates the RSTA's operating temperature and the determined time period. The ISTA receives the R2I LMR 832 at time t_{11'}, and obtains the RSTA's operating temperature and the determined time period. In some implementations, the ISTA may refrain from requesting ranging operations from the RSTA during the determined time period or for an indicated number of beacon intervals. In some instances, the ISTA may not transmit the I2R LMR 834 to the RSTA at time t₁₃. In addition, the RSTA may decline requests for ranging operations during the determined time period (e.g., from the ISTA and other nearby wireless devices). In this way, the ISTA may avoid determining RTT values when the corresponding ranging operation does not meet certain ranging accuracies.

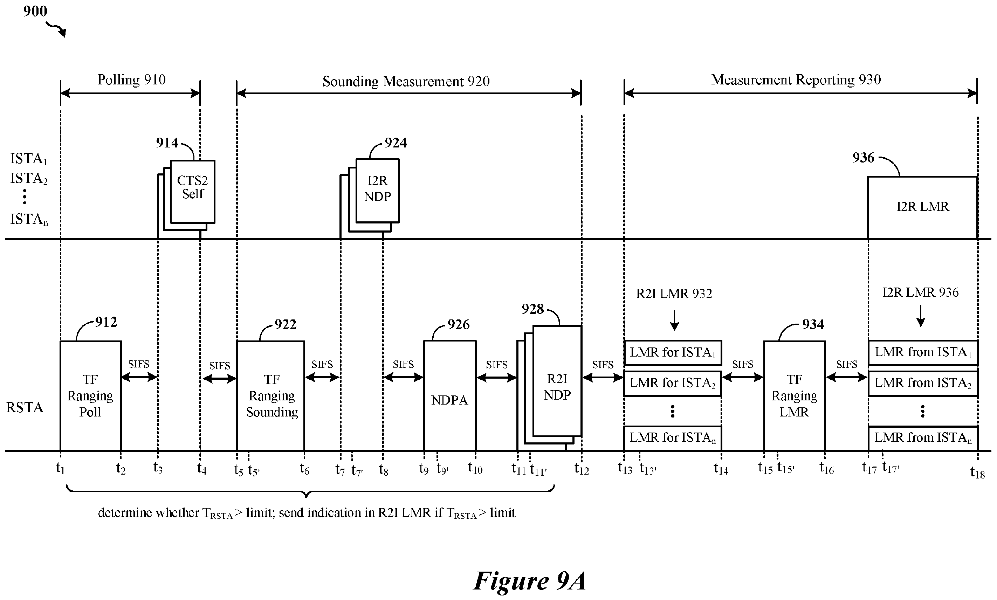

Figure 9A shows a timing diagram illustrating another example ranging operation 900, according to some other implementations. The ranging operation 900 may be performed between a responder device (RSTA) and a number of initiator devices (ISTA₁-ISTAₙ). In some implementations, the RSTA may be an AP such as the AP 102 of Figure 1 or the AP 502 of Figure 5A, and the initiator devices ISTA₁-ISTAₙ may be wireless stations such as the STA 104 of Figure 1 or the STA 504 of Figure 5B. In other implementations, the RSTA may be a wireless station, and the initiator devices ISTA₁-ISTAₙ may be an access point. In various implementations, the example ranging operation 900 may be based at least in part on one or more of the NGP techniques described in the IEEE 802.11az standards. In one implementation, the ranging operation 900 may be associated with a non-secure trigger-based (TB) ranging operation.

The ranging operation 900 is shown to include a polling phase 910, a measurement sounding phase 920, and a measurement reporting phase 930. Although not shown in Figure 9A for simplicity, the ranging operation 900 may also include a handshake process in which the RSTA exchanges iFTMR and iFTM frames with each of the initiator devices ISTA₁-ISTAₙ, for example, in a manner similar to that described with reference to Figure 8. For example, a respective ISTA can transmit an iFTMR frame to the RSTA. The RSTA receives the iFTMR frame, and sends an ACK frame to the ISTA to acknowledge reception of the iFTMR frame. The RSTA may send an iFTM frame to the ISTA, which responds by sending an ACK frame to the RSTA to acknowledge reception of the iFTM frame. In some implementations, the RSTA may perform the handshake process with each of the initiator devices ISTA₁-ISTAₙ sequentially (e.g., with one initiator device at a time). In various implementations, the RSTA and the ISTAs may inform each other of their availability for ranging operations or FTM sessions during the handshake process. In one implementation, the ISTA can indicate its availability for ranging operations or FTM sessions by setting the Availability Window field of the iFTMR frame to a corresponding value. Similarly, the RSTA can indicate its availability for ranging operations or FTM sessions by setting the Availability Window field of the iFTM frame to a corresponding value. In some instances, the RSTA can modify the value contained in the Availability Window field of the iFTM frame to indicate that the RSTA is not ready for the ranging operation or FTM session (e.g., because RSTA's operating temperature exceeds the threshold).

In various implementations, the RSTA may monitor its operating temperature, either periodically or randomly, during the handshake process to determine whether its temperature reaches or exceeds the threshold. When the RSTA's temperature exceeds the threshold, the RSTA may embed indications of its temperature and the determined time period into iFTM frames transmitted to the ISTAs. In some implementations, the determined time period can be indicated by a timer included in an IE or VSIE of a respective iFTM frame. In one implementation, the temperature of the RSTA may be indicated by one or both of a TOA error field or a TOD error field of the respective iFTM frame. In some instances, one or both of the TOA error field or the TOD error field may be set to a predetermined value indicating that the RSTA's temperature exceeds the threshold. For example, the bit values contained in one or both of the TOA error field or the TOD error field may be set to all "1's" (or alternatively to all "0's") to indicate that the temperature of the RSTA is above the threshold.

The ISTAs receive the iFTM frames, and obtain the RSTA's operating temperature and the determined time period. In some implementations, the ISTAs may refrain from requesting ranging operations from the RSTA during the determined time period or for an indicated number of beacon intervals. In addition, the RSTA may decline ranging requests associated with iFTMR frames during the determined time period. In this way, the ISTAs may avoid participating in ranging operations that do not meet certain ranging accuracies, and also may reduce power consumption by not participating in an exchange of null data packets (NDPs) with the RSTA. The ability to save power consumption when the RSTA's temperature exceeds the threshold may be especially beneficial for low-power wireless devices such as (but not limited to) smart watches and IoT devices.

The polling phase 910 begins with the RSTA transmitting a Trigger Frame (TF) Ranging Poll frame 912 to the ISTAs between times t₁ and t₂. The TF Ranging Poll frame 912 may solicit the transmission of a Clear-to-Send (CTS) to-self (CTS2Self) frame 914 from each of the ISTAs identified by the TF Ranging Poll frame 912. In some instances, the TF Ranging Poll frame 912 may allocate an RU to each of the identified ISTAs. Each ISTA identified by the TF Ranging Poll frame 912 can request to participate in the ranging operation by sending a CTS2Self frame 914 to the RSTA using the RU allocated by the TF Ranging Poll frame 912. In some instances, transmission of the CTS2Self frame 914 from a respective ISTA may indicate that the respective ISTA is ready to participate in the sounding measurement phase 920.

The measurement sounding phase 920 may be used by the RSTA to exchange one or more sounding frames or sequences (such as NDPs) with the ISTAs. For example, at time t₅, the RSTA transmits a TF Ranging Sounding frame 922 to the ISTAs. The TF Ranging Sounding frame 922 solicits each of the ISTAs to transmit an I2R NDP to the RSTA. The TF Ranging Sounding frame 922 may identify each of the solicited ISTAs, and may indicate the order in which the identified ISTAs are to transmit I2R NDPs to the RSTA. In some instances, the TF Ranging Sounding frame 922 allocates UL resources for the transmission of one or more I2R NDPs from the ISTAs multiplexed in the spatial stream domain.

The ISTAs receive the TF Ranging Sounding frame 922 just after time t₅ (e.g., at time t_{5'}, where the time period between times t₅ and t_{5'} equals one-half of the RTT between the ISTA and RSTA), and begin sequentially transmitting I2R NDPs 924 to the RSTA between times t₇ and t₈. In some instances, each I2R NDPs 924 may be an HE TB Ranging NDP. The RSTA receives the I2R NDPs 924 transmitted from respective ISTAs, and may capture the TOA of each I2R NDP 924. At time t₉, the RSTA transmits an NDPA 926 indicating that an NDP immediately follows (e.g., within a SIPS duration). The ISTAs receive the NDPA 926 just after time t₉ (e.g., at time t_{9'}, where the time period between times t₉ and t_{9'} equals one-half of the RTT between the ISTA and RSTA), and prepare to receive the R2I NDPs from the RSTA.

At time t₁₁, the RSTA begins sequentially transmitting R2I NDPs 928 to each of the ISTAs, and captures the TOD of each R2I NDP 928. The ISTAs receive the R2I NDPs 928 just after time t₁₁ (e.g., at time t_{11'}, where the time period between times t₁₁ and t_{11'} equals one-half of the RTT between the ISTA and RSTA), and capture the TOAs of the respective R2I NDPs 928. In various implementations, one or both of the RSTA or the ISTAs may determine RTT values based on the timestamps captured during the measurement sounding phase 920. In one implementation, the RSTA may use the received I2R NDPs 924 to estimate channel conditions between the RSTA and each of the ISTAs. In some instances, the RSTA can use the estimated channel conditions to determine AoA information of the I2R NDPs 924. Similarly, a respective ISTA may estimate channel conditions between the RSTA and the respective ISTA based on the corresponding R2I NDP 928 received from the RSTA. In some instances, the ISTA can use the estimated channel conditions to determine AoA information of the R2I NDP 928.

In various implementations, the RSTA may monitor its operating temperature, either periodically or randomly, to determine whether its temperature increases and exceeds the threshold during the measurement sounding phase 920. In some instances, the RSTA's operating temperature may remain below the threshold during the polling phase 910 and increase during the measurement sounding phase 920, for example, due to power and heat dissipation associated with transmitting and receiving NDPs (or other sounding frames) to and from the ISTAs. In some implementations, if the RSTA determines that its operating temperature exceeds the threshold at or before time t₁₂, the RSTA may determine a time period after which its operating temperature is expected to decrease below the threshold. The RSTA may transmit an indication of its operating temperature to the ISTAs during the measurement reporting phase 930.

The measurement reporting phase 930 may be used by the RSTA and the ISTAs to report measurements obtained from the ranging operation 900 to one another. For example, at time t₁₃, the RSTA transmits a multi-user (MU) R2I LMR 932 containing or indicating ranging information or feedback for each of the ISTAs. In some instances, the R2I LMR 932 may include or indicate the TOA of the I2R NDP 924 and the TOD of the R2I NDP 928 captured by the RSTA. The ISTAs receive the R2I LMRs 932 just after time t₁₃ (e.g., at time t_{13'}, where the time period between times t₁₃ and t_{13'} equals one-half of the RTT between the ISTA and RSTA), and may obtain the ranging measurements or feedback for a corresponding I2R NDP 924 and R2I NDP 928. In some instances, the R2I LMR 932 may also contain or indicate the AoA information of the I2R NDPs 924 and/or AoD information of the R2I NDPs 928.

At time t₁₅, the RSTA transmits a TF Ranging LMR 934 to the ISTAs. The TF Ranging LMR 934 may solicit each of the ISTAs to transmit a corresponding I2R LMR 936 to the RSTA. In some instances, the TF Ranging LMR 934 may identify each of the ISTAs, and may indicate the order in which the ISTAs are to transmit the I2R LMRs 936 to the RSTA. In response to receiving the TF Ranging LMR 934, the ISTAs transmits respective I2R LMRs 936 to the RSTA between times t₁₇ and t₁₈.

For instances in which the RSTA determined that its operating temperature exceeded the threshold during the measurement sounding phase 920, the RSTA may configure the R2I LMR 932 to contain or indicate its operating temperature and the determined time period. In some implementations, the determined time period can be indicated by a comeback timer of the R2I LMR 932. In one implementation, the RSTA's operating temperature may be indicated by one or both of the TOA error field or the TOD error field of the R2I LMR 932. In some instances, one or both of the TOA error field or the TOD error field may be set to a predetermined value indicating that the RSTA's temperature exceeds the threshold. For example, the bit values contained in one or both of the TOA error field or the TOD error field may be set to all "1's" (or alternatively to all "0's") to indicate that the temperature of the responder device is above the threshold.

In these instances, the R2I LMR 932 transmitted to the ISTAs at time t₁₃ contains or indicates the RSTA's operating temperature and the determined time period. The ISTAs receive the R2I LMR 932 at time t_{13'},, and obtain the RSTA's operating temperature and the determined time period. In some implementations, the ISTAs may refrain from requesting ranging operations from the RSTA during the determined time period or for an indicated number of beacon intervals. In some instances, the ISTAs may not transmit the I2R LMRs 936 to the RSTA at time t₁₇. In addition, the RSTA may decline requests for ranging operations during the determined time period (e.g., from the ISTAs and other nearby wireless devices). In this way, the ISTAs may avoid determining RTT values when the corresponding ranging operation does not meet certain ranging accuracies.

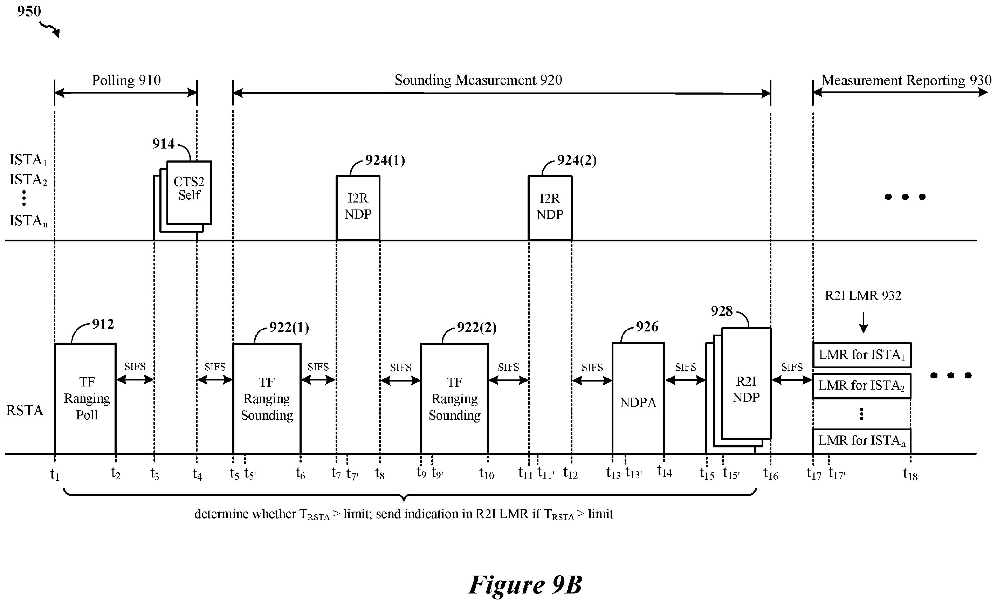

Figure 9B shows a timing diagram illustrating an example ranging operation 950, according to some other implementations. The ranging operation 950 may be performed between an RSTA and a number of initiator devices ISTA₁-ISTAₙ. In some implementations, the RSTA may be an AP such as the AP 102 of Figure 1 or the AP 502 of Figure 5A, and the ISTAs may be wireless stations such as the STA 104 of Figure 1 or the STA 504 of Figure 5B. In other implementations, the RSTA may be a wireless station, and the ISTAs may be access points. In various implementations, the example ranging operation 950 may be based at least in part on one or more of the NGP techniques described in the IEEE 802.11az standards. In one implementation, the ranging operation 950 may be associated with a secure TB ranging operation. In some instances, a secure FTM Session may be established when an ISTA and an RSTA establish a security context and use the security context to exchange the iFTMR frame and the corresponding iFTM frame in the Protected FTM Action frame format.

The handshake process of the ranging operation 950 may be similar to the handshake process of Figure 9A. In various implementations, the RSTA and the ISTAs may inform each other of their availability for ranging operations or FTM sessions during the handshake process. In one implementation, the ISTA can indicate its availability for ranging operations or FTM sessions by setting the Availability Window field of the iFTMR frame to a corresponding value. Similarly, the RSTA can indicate its availability for ranging operations or FTM sessions by setting the Availability Window field of the iFTM frame to a corresponding value. In some instances, the RSTA can modify the value contained in the Availability Window field of the iFTM frame to indicate that the RSTA is not ready for the ranging operation or FTM session (e.g., because RSTA's operating temperature exceeds the threshold).

The polling phase 910 of the ranging operation 950 is similar to the polling phase 910 of the ranging operation 900 of Figure 9A. In various implementations, the RSTA may monitor its operating temperature, either periodically or randomly, during the handshake process to determine whether its temperature reaches or exceeds the threshold. When the RSTA's temperature exceeds the threshold, the RSTA may embed indications of its temperature and the determined time period into the iFTM frames, and may transmit the iFTM frames to the ISTAs. In some implementations, the determined time period can be indicated by a timer included in an IE or VSIE of a respective iFTM frame. In one implementation, the temperature of the RSTA may be indicated by one or both of a TOA error field or a TOD error field of the respective iFTM frame. In some instances, one or both of the TOA error field or the TOD error field may be set to a predetermined value indicating that the RSTA's temperature exceeds the threshold. For example, the bit values contained in one or both of the TOA error field or the TOD error field may be set to all "1's" (or alternatively to all "0's") to indicate that the temperature of the RSTA is above the threshold.

The ISTAs receive the iFTM frames, and obtain the RSTA's operating temperature and the determined time period. In some implementations, the ISTAs may refrain from requesting ranging operations from the RSTA during the determined time period or for an indicated number of beacon intervals. In addition, the RSTA may decline ranging requests contained in iFTMR frames during the determined time period. In this way, the ISTAs may avoid participating in ranging operations that do not meet certain ranging accuracies, and also may reduce power consumption by not participating in an exchange of NDPs with the RSTA. The ability to save power consumption when the RSTA's temperature exceeds the threshold may be especially beneficial for low-power wireless devices such as (but not limited to) smart watches and IoT devices.

The measurement sounding phase 920 begins at time t₅ with the RSTA transmitting a first TF Ranging Sounding frame 922(1) to the first initiator device ISTA₁. The first TF Ranging Sounding frame 922(1), which may identify ISTA₁ and allocate UL resources to ISTA₁, solicits transmission of an I2R NDP from ISTA₁. In response to receiving the first TF Ranging Sounding frame 922(1), ISTA₁ transmits a first I2R NDP 924(1) to the RSTA at time t₇, and captures the ToD of the first I2R NDP 924(1) as time t₇. The RSTA receives the first I2R NDP 924(1) just after time t₇ (e.g., at time t_{7'}, where the time period between times t₇ and t_{7'} equals one-half of the RTT between the ISTA and RSTA), and captures the ToA of the first I2R NDP 924(1) as time t_{7'}. The RSTA transmits a second TF Ranging Sounding frame 922(2) to the second initiator device ISTA₂ at time t₉. The second TF Ranging Sounding frame 922(2), which may identify ISTA₂ and allocate UL resources to ISTA₂, solicits transmission of an I2R NDP from ISTA₂. In response to receiving the second TF Ranging Sounding frame 922(2), ISTA₂ transmits a second I2R NDP 924(2) to the RSTA at time t₁₁, and captures the ToD of the second I2R NDP 924(2) as time t₁₁. The RSTA receives the second I2R NDP 924(2) just after time t₁₁ (e.g., at time t_{11'}, where the time period between times t₁₁ and t_{11'} equals one-half of the RTT between the ISTA and RSTA), and captures the ToA of the second I2R NDP 924(2) as time t_{11'}. The RSTA may continue transmitting TF Ranging Sounding frames and receiving corresponding I2R NDPs 924 from the remaining ISTAs participating in the sounding measurement phase 920.

At time t₁₃, the RSTA transmits an NDPA 926 indicating that the RSTA is to transmit NDPs to the ISTAs immediately after (e.g., within a SIPS duration) transmission of the NDPA 926. The ISTAs receive the NDPA 926 just after time t₁₃ (e.g., at time t_{13'}, where the time period between times t₁₃ and t_{13'} equals one-half of the RTT between the ISTA and RSTA), and prepare to receive the R2I NDPs from the RSTA. At time t₁₅, the RSTA begins sequentially transmitting R2I NDPs 928 to each of the ISTAs, and captures the TOD of each R2I NDP 928. The ISTAs receive the R2I NDPs 928 just after time t₁₅ (e.g., at time t_{15'}, where the time period between times t₁₅ and t_{15'} equals one-half of the RTT between the ISTA and RSTA), and capture the TOAs of the respective R2I NDPs 928. In some implementations, one or both of the RSTA or the ISTAs may determine RTT values based on the timestamps captured during the measurement sounding phase 920. In one implementation, the RSTA may use the received I2R NDPs 924 to estimate channel conditions between the RSTA and each of the ISTAs. In some instances, the RSTA can use the estimated channel conditions to determine AoA information of the received I2R NDPs 924. Similarly, a respective ISTA may estimate channel conditions between the RSTA and the respective ISTA based on the corresponding R2I NDP 928 received from the RSTA. In some instances, the ISTA can use the estimated channel conditions to determine AoA information of the corresponding R2I NDP 928.

In various implementations, the RSTA may monitor its operating temperature, either periodically or randomly, to determine whether its temperature increases and exceeds the threshold during the measurement sounding phase 920. If the RSTA determines that its operating temperature exceeds the threshold at or before time t₁₆, the RSTA may determine a time period after which its operating temperature is expected to decrease below the threshold, and may transmit an indication of its operating temperature and the determined time period to the ISTAs in a manner similar to that described with reference to Figure 9A.

The measurement reporting phase 930 of the operation 950 is similar to the measurement reporting phase 930 of Figure 9A, and begins at time t₁₇ with the RSTA transmitting an MU R2I LMR 932 to the ISTAs. The MU R2I LMR 932 may indicate ranging information or feedback for each of the ISTAs. As an example, a first R2I LMR 932 transmitted to ISTA₁ may include (but is not limited to) the TOA of the I2R NDP 924(1), the AoA of the I2R NDP 924(1), the TOD of the R2I NDP 928 transmitted to ISTA₁, and the AoD of the R2I NDP 928 transmitted to ISTA₁. As another example, a second R2I LMR 932 transmitted to ISTA₂ may include (but is not limited to) the TOA of the I2R NDP 924(2), the AoA of the I2R NDP 924(2), the TOD of the R2I NDP 928 transmitted to ISTA₂, and the AoD of the R2I NDP 928 transmitted to ISTA₂. The ISTAs receive the R2I LMRs 932 just after time t₁₇ (e.g., at time t_{17'}, where the time period between times t₁₇ and t_{17'} equals one-half of the RTT between the ISTA and RSTA), and may obtain the ranging measurements or feedback for a corresponding I2R NDP 924 and R2I NDP 928.

With reference to Figure 9A, the RSTA transmits a TF Ranging LMR 934 to the ISTAs. The TF Ranging LMR 934 may solicit each of the ISTAs to transmit a corresponding I2R LMR 936 to the RSTA. In some instances, the TF Ranging LMR 934 may identify each of the ISTAs, and may indicate the order in which the ISTAs are to transmit the I2R LMRs 936 to the RSTA. In response to receiving the TF Ranging LMR 934, the ISTAs may transmit respective I2R LMRs 936 to the RSTA.

For instances in which the RSTA determined that its operating temperature exceeded the threshold during the measurement sounding phase 920, the RSTA may configure the R2I LMR 932 to contain or indicate its operating temperature and the determined time period. In some implementations, the determined time period can be indicated by a comeback timer of the R2I LMR 932. In one implementation, the RSTA's operating temperature may be indicated by one or both of the TOA error field or the TOD error field of the R2I LMR 932. In some instances, one or both of the TOA error field or the TOD error field may be set to a predetermined value indicating that the RSTA's temperature exceeds the threshold. For example, the bit values contained in one or both of the TOA error field or the TOD error field may be set to all "1's" (or alternatively to all "0's") to indicate that the temperature of the responder device is above the threshold.

In these instances, the R2I LMR 932 transmitted to the ISTAs contains or indicates the RSTA's operating temperature and the determined time period. The ISTAs receive the R2I LMR 932, and obtain the RSTA's operating temperature and the determined time period. In some implementations, the ISTAs may refrain from requesting ranging operations from the RSTA during the determined time period or for an indicated number of beacon intervals. In some instances, the ISTAs may not transmit I2R LMRs 936 to the RSTA. In addition, the RSTA may decline requests for ranging operations during the determined time period. In this way, the ISTAs may avoid determining RTT values when the corresponding ranging operation does not meet certain ranging accuracies.

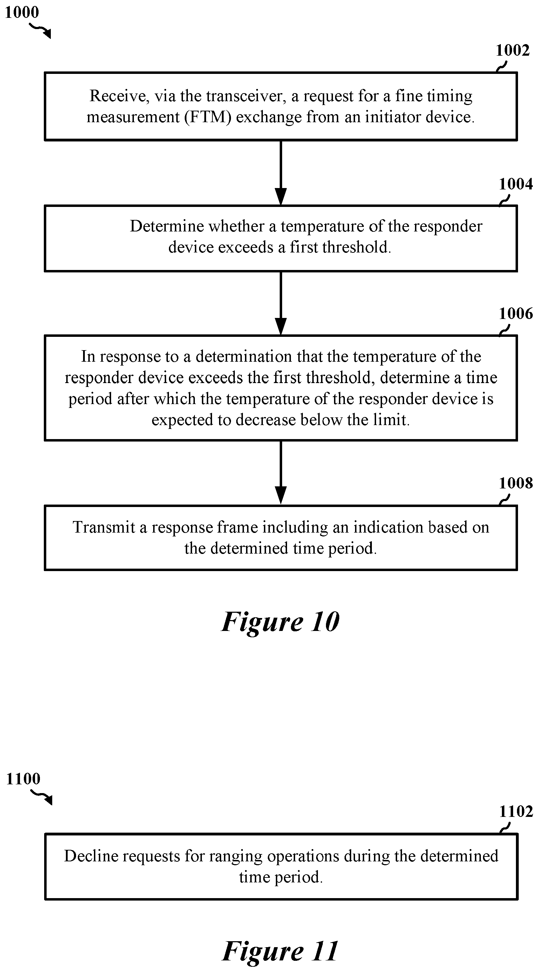

Figure 10 shows a flowchart illustrating an example ranging operation 1000 between an initiator device (ISTA) and a responder device (RSTA), according to some implementations. In one implementation, the ISTA may be a wireless station such as the STA 104 of Figure 1 or the STA 504 of Figure 5B, and the RSTA may be an access point such as the AP 102 of Figure 1 or the AP 502 of Figure 5A. In some other implementations, the ISTA may be an AP, and the RSTA may be a wireless station. For example, at block 1002, the RSTA receives, via the transceiver, a request for a ranging operation with the ISTA. At block 1004, the RSTA determines whether a temperature of the RSTA exceeds a threshold. At block 1006, the RSTA determines, in response to a determination that the temperature of the RSTA exceeds the threshold, a time period after which the temperature of the RSTA is expected to decrease below the threshold. At block 1008, the RSTA transmits a response frame including an indication based on the determined time period. In some instances, the response frame may also indicate the temperature of the responder device, whether the responder device's temperature exceeds the threshold, or any combination thereof. In some implementations, the response frame may be a unicast frame transmitted to the initiator device. In other implementations, the response frame may be a multicast frame transmitted to the initiator device and one or more other wireless communication devices. In some other implementations, the response frame may be a broadcast frame. In one implementation, the RSTA may transmit the response frame including the determined time period when the determined time period is less than a value, and may refrain from transmitting the response frame when the determined time period is greater than or equal to the value. The value, which may be set to any suitable duration of time, may be used to indicate that the RSTA is not available for ranging operations (e.g., rather than sending or broadcasting the determined time period).

In various implementations, the response frame may be an FTM action frame. The determined time period may be indicated by a timer included in an information element (IE) of the FTM action frame. For example, the FTM action frame may include a vendor-specific information element (VSIE) containing a comeback timer that indicates the determined time period. In some instances, the temperature of the RSTA may be indicated in one or both of a time-of-arrival (TOA) error field or a time-of-departure (TOD) error field of the FTM action frame. In some aspects, one or both of the TOA error field or the TOD error field of the FTM action frame may be set to a predetermined value indicating that the temperature of the RSTA exceeds the threshold.

In other implementations, the response frame may include an R2I LMR. The determined time period may be indicated by a timer included in the R2I LMR. In some instances, the temperature of the RSTA may be indicated in one or both of a TOA error field or a TOD error field of the R2I LMR. In some aspects, one or both of the TOA error field or the TOD error field of the R2I LMR may be set to a predetermined value indicating that the temperature of the responder device exceeds the threshold.

In some other implementations, the response frame may be a TF Ranging Poll frame. In some instances, the determined time period and temperature may be indicated by one or more reserved bits in the User Info field of the TF Ranging Poll frame.

Figure 11 shows a flowchart illustrating an example ranging operation between an ISTA and an RSTA, according to some implementations. In one implementation, the ISTA may be a wireless station such as the STA 104 of Figure 1 or the STA 504 of Figure 5B, and the RSTA may be an access point such as the AP 102 of Figure 1 or the AP 502 of Figure 5A. In some other implementations, the ISTA may be an AP, and the RSTA may be a wireless station. In various implementations, the operation 1100 may be performed after the RSTA transmits the response frame to the ISTA in block 1008 of Figure 10. For example, at block 1102, the RSTA declines requests for ranging operations during the determined time period. In some implementations, the RSTA may indicate its temperature and a remaining portion of the determined time period to one or more ISTAs in a frame such as (but not limited to) an FTM action frame, a TF Ranging Poll, or an R2I LMR. In this way, the RSTA may avoid participating in ranging operations when ranging errors resulting from clock drift or frequency offsets are greater than an amount. In some instances, the amount may correspond to a maximum amount of ranging errors for a particular application.

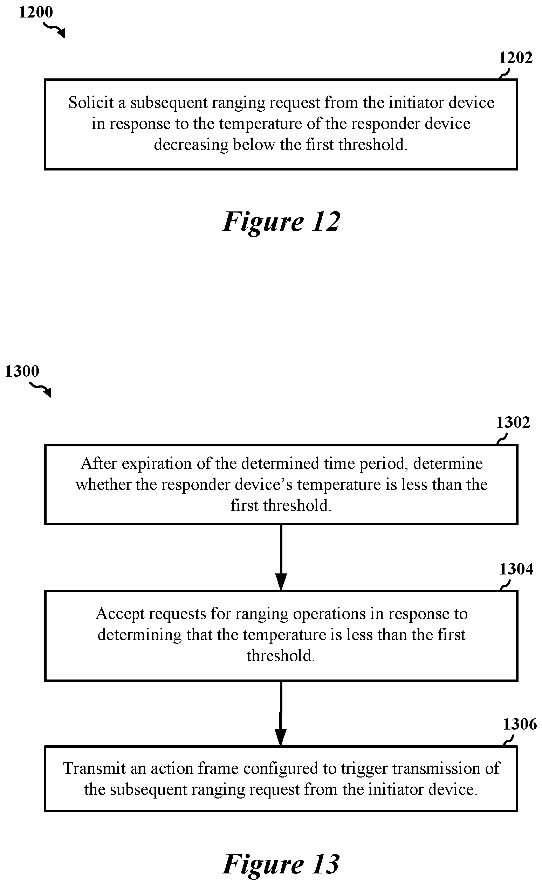

Figure 12 shows a flowchart illustrating an example ranging operation between an ISTA and an RSTA, according to some implementations. In one implementation, the ISTA may be a wireless station such as the STA 104 of Figure 1 or the STA 504 of Figure 5B, and the RSTA may be an access point such as the AP 102 of Figure 1 or the AP 502 of Figure 5A. In some other implementations, the ISTA may be an AP, and the RSTA may be a wireless station. In various implementations, the operation 1200 may be performed after the RSTA determines the time period in block 1006 of Figure 10. For example, at block 1202, the RSTA solicits a subsequent ranging request from the ISTA in response to the temperature of the RSTA decreasing below the threshold. In some implementations, the RSTA may solicit the subsequent ranging request by transmitting an action frame configured to trigger transmission of the subsequent ranging request from the ISTA. In some instances, the action frame may be a Trigger Frame (TF) Ranging Poll frame, a fine timing measurement (FTM) Request frame, a location measurement report (LMR) frame, or a vendor action frame.

Figure 13 shows a flowchart illustrating an example ranging operation 1300 between an ISTA and an RSTA, according to some implementations. In one implementation, the ISTA may be a wireless station such as the STA 104 of Figure 1 or the STA 504 of Figure 5B, and the RSTA may be an access point such as the AP 102 of Figure 1 or the AP 502 of Figure 5A. In some other implementations, the ISTA may be an AP, and the RSTA may be a wireless station. In various implementations, the operation 1300 may be performed after the RSTA transmits the response frame to the ISTA in block 1008 of Figure 10. For example, at block 1302, after expiration of the determined time period, the RSTA determines whether the RSTA's temperature is less than the threshold. At block 1304, the RSTA may accept requests for ranging operations in response to determining that the temperature is less than the threshold. At block 1306, the RSTA may transmit an action frame configured to trigger transmission of a subsequent ranging request from the ISTA. In one implementation, the action frame may be a TF Ranging Poll frame, an FTMR frame, an LMR frame, or a vendor action frame.

By accepting requests for ranging operations only when its operating temperature is less than the threshold, the RSTA may ensure that ranging errors resulting from clock drift and/or frequency offsets at temperatures greater than a certain temperature threshold are avoided. As discussed, in some instances, the temperature threshold may correspond to a specified frequency accuracy such as (but not limited to) the 20 ppm accuracy specified by the IEEE 802.11 family of wireless communications standards. In other instances, the temperature threshold may correspond to a maximum acceptable ranging error resulting from clock drift and/or frequency offsets between the RSTA and the ISTA.

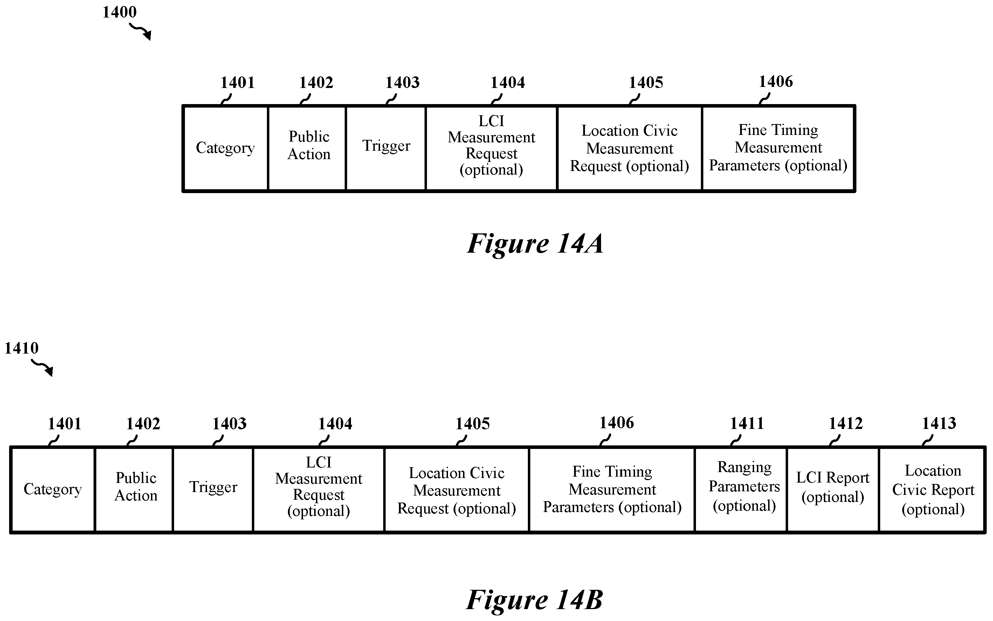

Figure 14A shows an example FTM Request frame 1400, according to some implementations. The FTM Request frame 1400, which may be used in one or more of the ranging operations described herein, may be specified by the IEEE 802.11REVmd standards. In one implementation, the FTM Request frame 1400 includes a category field 1401, a public action field 1402, a trigger field 1403, an optional Location Civic Information (LCI) measurement request field 1404, an optional Location Civic measurement request field 1405, and an optional FTM measurement parameters field 1406. The category field 1401 indicates a category of the FTM Request frame 1400 (e.g., the Radio Measurement category). The public action field 1402 indicates a type of public action frame format. When the Trigger field 1403 is set to 1, the ISTA requests that the RSTA start or continue sending FTM frames. When the Trigger field 1403 is set to 0, the ISTA requests that the RSTA stop sending FTM frames. The LCI measurement request field 1404, if present, includes a Measurement Request element containing a request for a Measurement Report element of type LCI. The Location Civic measurement request field 1405, if present, includes a Measurement Request element containing a request for a Measurement Report element of type Location Civic. The FTM measurement parameters field 1406 is present if the ISTA requests negotiation of parameters with the RSTA to perform fine timing measurement.

Figure 14B shows an example FTM Request frame 1410, according to other implementations. The FTM Request frame 1410, which may be used in one or more of the ranging operations described herein, may be specified by the IEEE 802.11az standards. The FTM Request frame 1410 includes the fields 1401-1406 of the FTM Request frame 1400 of Figure 14A, and also includes an optional ranging parameters field 1411, an optional LCI report field 1412, and an optional Location Civic Report field 1413. The ranging parameters field 1411, if present, indicates one or more FTM parameters negotiated between the ISTA and the RSTA. The LCI report field 1412 is present if the FTM Request frame 1410 contains a trigger-based (TB) specific subelement with the Passive TB Ranging field set to 1, and may contain the Antenna Placement and Calibration subelement. The Location Civic Report field 1413, if present, contains a Location Civic measurement report.

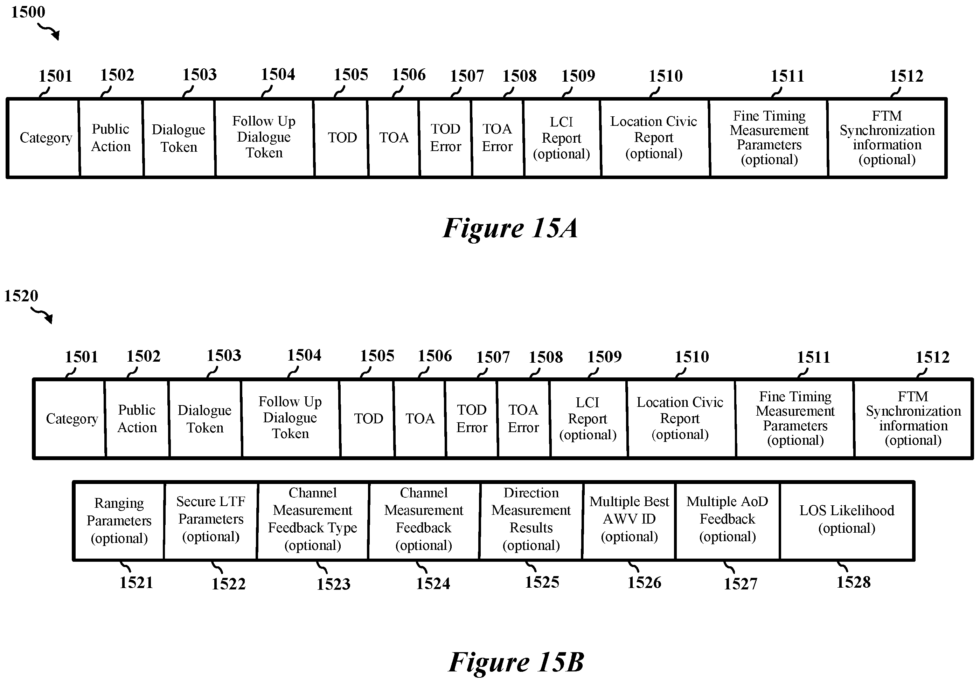

Figure 15A shows an example FTM action frame 1500, according to some implementations. The FTM action frame 1500, which may be used in one or more of the ranging operations described herein, may be specified by the IEEE 802.11REVmd standards. The FTM action frame 1500 may include a category field 1501, a public action field 1502, a dialogue token field 1503, a follow up dialog token field 1504, a TOD field 1505, a TOA field 1506, a TOD error field 1507, a TOA error field 1508, an optional LCI report field 1509, an optional Location Civic report field 1510, an optional FTM parameters field 1511, and an optional FTM synchronization information field 1512. The category field 1501 indicates a category of the FTM action frame 1500 (e.g., the Radio Measurement category). The public action field 1502 indicates a type of public action frame format. The dialogue token field 1503 may be set to a nonzero value chosen by the responding STA to identify the FTM frame as the first of a pair, or may be set to zero to indicate the end of the FTM session. The follow up dialog token field 1504 may be set to the nonzero value of the Dialog Token field of the last transmitted Fine Timing Measurement frame, or may be set to zero to indicate that the TOD field 1505, the TOA field 1506, the TOD error field 1507, and the TOA error field 1508 are reserved.

The TOD field 1505 contains a timestamp that represents the time, with respect to a time base, at which the start of the preamble of the last transmitted FTM frame appeared at the transmit antenna connector. The TOA field 1506 contains a timestamp that represents the time, with respect to a time base, at which the start of the preamble of the last transmitted ACK frame arrived at the receive antenna connector. The TOD error field 1507 indicates the maximum error in the captured TOD value. The TOA error field 1508 indicates the maximum error in the captured TOA value. In some implementations, one or more bits (or reserved bits) of the TOD error field 1507 and/or the TOA error field 1508 may be used to indicate the operating temperature of the RSTA (or other wireless communication device that transmits the FTM action frame 1500).

The LCI report field 1509, if present, contains a Measurement Report element which either indicates the LCI of the transmitting STA or an unknown LCI. The Location Civic report field 1510, if present, contains a Measurement Report element which either indicates the LCI of the transmitting STA or an unknown LCI. The FTM parameters field 1511 is present in the initial FTM frame and is not present in subsequent FTM frames. If present, the FTM parameters field 1511 contains an FTM Parameters element. The FTM synchronization information field 1512 is present in the initial FTM frame and any retransmissions, and contains an FTM Synchronization Information element with a TSF Sync Info field containing the 4 least significant octets of the RSTA's TSF at the time the RSTA received the last FTM Request frame with the Trigger field equal to 1.

Figure 15B shows an example FTM action frame 1520, according to other implementations. The FTM action frame 1520, which may be used in one or more of the ranging operations described herein, may be specified by the IEEE 802.11az standards. The FTM action frame 1520 includes the fields 1501-1512 of the FTM action frame 1500 of Figure 15A, and also includes an optional Ranging Parameters field 1521, an optional Secure LTF Parameters field 1522, an optional Channel Measurement Feedback type field 1523, an optional Channel Measurement Feedback field 1524, an optional Direction Measurement Results field 1525, an optional Multiple Best AWV ID field 1526, an optional Multiple AoD Feedback field, 1527, and an optional LOS Likelihood field 1528.

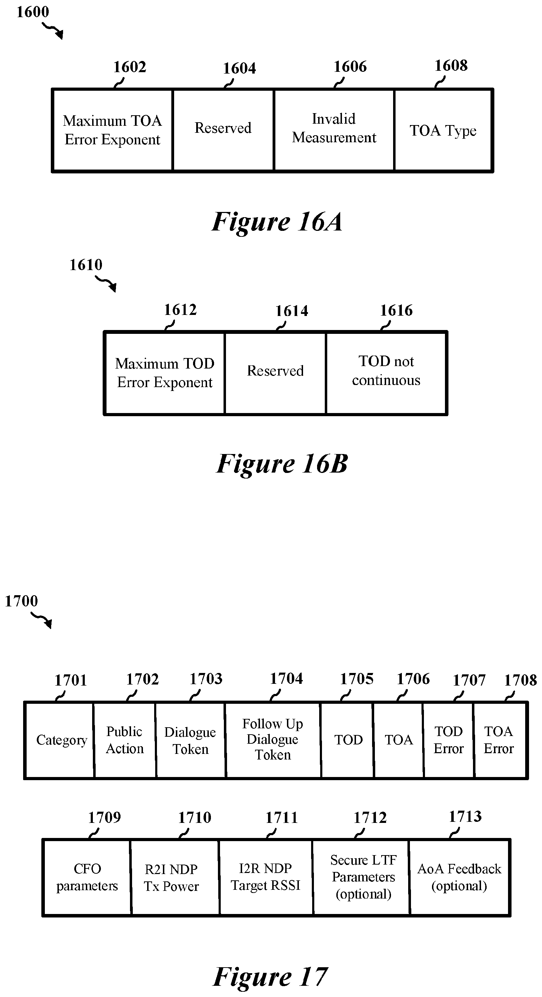

Figure 16A shows an example TOA error field 1600. The TOA error field 1600, which may be used in one or more of the ranging operations described herein, may be specified by the IEEE 802.11REVmd standards and/or the IEEE 802.11az standards. The TOA error field 1600 includes a maximum TOA error exponent subfield 1602, one or more reserved bits 1604, an invalid measurement subfield 1606, and a TOA type subfield 1608. The maximum TOA error exponent subfield 1602 may contains an upper bound for the error exponent in the value specified in the TOA field. The invalid measurement subfield 1606, and a TOA type subfield 1608. In some implementations, an indication of the temperature of the responder device may be contained in the TOA error field 1600 of an FTM action frame (such as the FTM action frame 1500 of Figure 15A or the FTM action frame 1520 of Figure 15B). In some other implementations, the TOA error field 1600 may be set to a predetermined value indicating that the temperature of the responder device exceeds the threshold.

Figure 16B shows an example TOD error field 1610. The TOD error field 1610, which may be used in one or more of the ranging operations described herein, may be specified by the IEEE 802.11REVmd standards and/or the IEEE 802.11az standards. The TOD error field 1610 includes a maximum TOD error exponent subfield 1612, one or more reserved bits 1614, and a TOD not continuous subfield 1616. The maximum TOD error exponent subfield 1612 contains an upper bound for the error exponent in the value specified in the TOD field. The TOD not continuous subfield 1616 indicates that the TOD value is with respect to a different underlying time base than the last transmitted TOA value. In some implementations, an indication of the temperature of the responder device may be contained in the TOD error field 1610 of an FTM action frame (such as the FTM action frame 1500 of Figure 15A or the FTM action frame 1520 of Figure 15B). In some other implementations, the TOD error field 1610 may be set to a predetermined value indicating that the temperature of the responder device exceeds the threshold.

Figure 17 shows an example Location Measurement Report (LMR) frame 1700. The LMR frame 1700, which may be used in one or more of the ranging operations described herein, may be specified by the IEEE 802.11REVmd standards and/or the IEEE 802.11az standards. The LMR frame 1700 includes a category field 1701, a public action field 1702, a dialogue token field 1703, a follow up dialog token field 1704, a TOD field 1705, a TOA field 1706, a TOD error field 1707, a TOA error field 1708, an optional LCI report field 1709, an optional Location Civic report field 1710, a CFO parameters field 1709, an optional secure LTF parameters field 1710, an optional AoA Feedback field 1711. The category field 1701 indicates a category of the FTM action frame 1700 (e.g., the Radio Measurement category). The public action field 1702 indicates a type of public action frame format. The dialogue token field 1703 may be set to a nonzero value chosen by the responding STA to identify the FTM frame as the first of a pair, or may be set to zero to indicate the end of the FTM session. The follow up dialog token field 1704 may be set to the nonzero value of the Dialog Token field of the last transmitted Fine Timing Measurement frame, or may be set to zero to indicate that the TOD field 1705, the TOA field 1706, the TOD error field 1707, and the TOA error field 1708 are reserved.

The TOD field 1705 contains a timestamp that represents the time, with respect to a time base, at which the start of the preamble of the last transmitted FTM frame appeared at the transmit antenna connector. The TOA field 1706 contains a timestamp that represents the time, with respect to a time base, at which the start of the preamble of the last transmitted NDP (such as one of the I2R NDPs 824 or R2I NDPs 826 of Figure 8) arrived at the receive antenna connector. The TOD error field 1707 can indicate the maximum error in the captured TOD value. The TOA error field 1708 can indicate the maximum error in the captured TOA value. In some implementations, one or more bits of the TOD error field 1707, the TOA error field 1708, the reserved bits, or any combination thereof may be used to indicate the operating temperature of the RSTA (or another wireless communication device that transmits the FTM action frame 1500 or 1520).

The CFO parameters field 1709 may indicate the clock rate difference between the ISTA and the RSTA. The R2I NDP Tx Power field 1710 indicates the combined average power per 20 MHz bandwidth referenced to the antenna connector, of all antennas used to transmit the preceding R2I NDP. The Target RSSI field 1711 indicates the preferred receive signal power, averaged over the RSTA's antenna connectors, for future I2R NDPs transmitted by the ISTA. The optional secure LTF parameters field 1712 is present if an ISTA and RSTA have negotiated FTM session with secure LTF measurement exchange mode. The optional AoA feedback field 1713 may contain a Direction Measurement Results element.

As used herein, a phrase referring to "at least one of" or "one or more of" a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c.

The various illustrative components, logic, logical blocks, modules, circuits, operations, and algorithm processes described in connection with the implementations disclosed herein may be implemented as electronic hardware, firmware, software, or combinations of hardware, firmware, or software, including the structures disclosed in this specification. The interchangeability of hardware, firmware and software has been described generally, in terms of functionality, and illustrated in the various illustrative components, blocks, modules, circuits and processes described above. Whether such functionality is implemented in hardware, firmware or software depends upon the particular application and design constraints imposed on the overall system.

Various modifications to the implementations described in this disclosure may be readily apparent to persons having ordinary skill in the art, and the generic principles defined herein may be applied to other implementations that fall within the scope of the appended claims.

Additionally, various features that are described in this specification in the context of separate implementations also can be implemented in combination in a single implementation. Conversely, various features that are described in the context of a single implementation also can be implemented in multiple implementations separately or in any suitable subcombination. As such, although features may be described above as acting in particular combinations, and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

## Claims

1. A responder device (502), comprising:
a transceiver configured to exchange wireless signals with one or more wireless communication devices (510);
a memory (540); and
one or more processors (530) communicatively coupled to the memory (540), the one or more processors (530) configured to:
receive, via the transceiver, a request for a ranging operation with an initiator device (104);
in response to receiving the request for the ranging operation, determine whether a temperature of the responder device (502) meets or exceeds a first threshold; and
in response to a determination that the temperature of the responder device (502) meets or exceeds the threshold:
determine a time period after which the temperature of the responder device (502) is expected to decrease below the threshold; and
transmit, via the transceiver, a response frame, the response frame including an indication, the indication being based on the determined time period.

2. The responder device of claim 1, wherein the transmitting comprises:
transmitting the response frame including the determined time period only when the determined time period is less than a value.

3. The responder device of claim 1, wherein the response frame indicates the temperature of the responder device.

4. The responder device of claim 1, wherein the determination that the responder device's temperature exceeds the threshold indicates that ranging errors resulting from clock drift and/or frequency offsets between the responder device and the initiator device are greater than an amount.

5. The responder device of claim 1, wherein the determined time period indicates a number of beacon intervals during which the initiator device is to refrain from initiating ranging operations with the responder device.

6. The responder device of claim 1, wherein the determined time period is based on the temperature of the responder device, an amount of time that the temperature of the responder device has exceeded the threshold, one or more other previously determined time periods for one or more temperatures of the responder device that exceeded the threshold, a correlation between temperatures of the responder device and ranging errors resulting from clock drift and/or frequency offsets between the responder device and the initiator device, or any combination thereof.

7. The responder device of claim 1, wherein the response frame comprises a fine timing measurement, FTM, action frame, a Trigger Frame, TF, Ranging Poll frame, or a responder-to-initiator, R2I, location measurement report, LMR.

8. The responder device of claim 1, wherein the determined time period is indicated by a timer included in an information element, IE, of the response frame.

9. The responder device of claim 1, wherein the temperature of the responder device is indicated by one or both of a time-of-arrival, TOA, error field or a time-of-departure, TOD, error field of the response frame, and optionally wherein one or both of the TOA error field or the TOD error field are set to a predetermined value indicating that the temperature of the responder device exceeds the threshold.

10. The responder device of claim 1, wherein the one or more processors are further configured to:
decline requests for ranging operations during the determined time period.

11. The responder device of claim 1, wherein the one or more processors are further configured to:
solicit a subsequent ranging request from the initiator device in response to the temperature of the responder device decreasing below the threshold, and optionally wherein soliciting the subsequent ranging request includes transmitting, via the transceiver, an action frame configured to trigger transmission of the subsequent ranging request from the initiator device, and optionally wherein the action frame comprises a trigger frame, TF, Ranging Poll frame, a fine timing measurement, FTM, request frame, a location measurement report, LMR frame, or a vendor action frame.

12. A method of wireless communication performed by a responder device (502), comprising:
receiving a request for a ranging operation with an initiator device (104);
in response to receiving the request for the ranging operation, determining whether a temperature of the responder device (502) exceeds a threshold; and
in response to a determination that the temperature of the responder device (502) exceeds the threshold:
determining a time period after which the temperature of the responder device (502) is expected to decrease below the threshold; and
transmitting a response frame, the response frame including an indication, the indication being based on the determined time period.

13. The method of claim 12, wherein the determined time period is based on the temperature of the responder device, an amount of time that the temperature of the responder device has exceeded the threshold, one or more other time periods previously determined for one or more temperatures of the responder device that exceeded the threshold, a correlation between temperatures of the responder device and ranging errors resulting from clock drift and/or frequency offsets between the responder device and the initiator device, an amount of queued data in the responder device, the number and size of active traffic flows handled by the responder device, or any combination thereof.

14. The method of claim 12, further comprising:
after expiration of the determined time period, determining whether the responder device's temperature is less than the threshold; and
in response to determining that the temperature of the responder device is less than the threshold, transmit, via the transceiver, an action frame configured to trigger a subsequent request for ranging operations from the initiator device.

15. A non-transitory computer-readable medium (540) storing computer executable code, comprising:
receiving a request for a ranging operation with an initiator device (104);
in response to receiving the request for the ranging operation, determining whether a temperature of the responder device (502) exceeds a threshold; and
in response to a determination that the temperature of the responder device (502) exceeds the threshold:
determining a time period after which the temperature of the responder device (502) is expected to decrease below the threshold; and
transmitting a response frame, the response frame including an indication, the indication being based on the determined time period.

## Patentansprüche

1. Respondergerät (502), das Folgendes umfasst:
einen Transceiver, konfiguriert zum Austauschen drahtloser Signale mit einem oder mehreren drahtlosen Kommunikationsgeräten (510);
einen Speicher (540); und
einen oder mehrere Prozessoren (530), die kommunikativ mit dem Speicher (540) gekoppelt sind, wobei die ein oder mehreren Prozessoren (530) konfiguriert sind zum:
Empfangen, über den Transceiver, einer Anforderung für einen Entfernungsmessvorgang mit einem Initiatorgerät (104);
Feststellen, als Reaktion auf den Empfang der Anforderung für den Entfernungsmessvorgang, ob eine Temperatur des Respondergeräts (502) einen ersten Schwellenwert erreicht oder überschreitet; und
als Reaktion auf eine Feststellung, dass die Temperatur des Respondergeräts (502) den Schwellenwert erreicht oder überschreitet:
Bestimmen eines Zeitraums, nach dem erwartet wird, dass die Temperatur des Respondergeräts (502) unter den Schwellenwert sinkt; und
Senden, über den Transceiver, eines Antwortframe, wobei der Antwortframe eine Angabe enthält, wobei die Angabe auf dem bestimmten Zeitraum basiert.

2. Respondergerät nach Anspruch 1, wobei das Senden Folgendes beinhaltet:
Senden des den bestimmten Zeitraum enthaltenden Antwortframe nur dann, wenn der bestimmte Zeitraum kleiner als ein Wert ist.

3. Respondergerät nach Anspruch 1, wobei der Antwortframe die Temperatur des Respondergeräts angibt.

4. Respondergerät nach Anspruch 1, wobei das Feststellen, dass die Temperatur des Respondergeräts den Schwellenwert überschreitet, anzeigt, dass aus Taktdrift und/oder Frequenzabweichungen zwischen dem Respondergerät und dem Initiatorgerät resultierende Entfernungsmessfehler größer als ein Betrag sind.

5. Respondergerät nach Anspruch 1, wobei der bestimmte Zeitraum eine Anzahl von Bakenintervallen angibt, während derer das Initiatorgerät keine Entfernungsmessvorgänge mit dem Respondergerät initiieren soll.

6. Respondergerät nach Anspruch 1, wobei der bestimmte Zeitraum auf der Temperatur des Respondergeräts, einer Zeitdauer, während der die Temperatur des Respondergeräts den Schwellenwert überschritten hat, einem oder mehreren anderen zuvor bestimmten Zeiträumen für eine oder mehrere Temperaturen des Respondergeräts, die den Schwellenwert überschritten haben, einer Korrelation zwischen Temperaturen des Respondergeräts und aus Taktdrift und/oder Frequenzabweichungen zwischen dem Respondergerät und dem Initiatorgerät resultierenden Entfernungsmessfehlern oder einer beliebigen Kombination daraus basiert.

7. Respondergerät nach Anspruch 1, wobei der Antwortframe einen FTM-(Fine Timing Measurement)-Aktionsframe, einen TF (Trigger Frame), Ranging Poll Frame oder einen R2I-(Responder-to-Initiator)-LMR (Location Meeasurement Report) umfasst.

8. Respondergerät nach Anspruch 1, wobei der bestimmte Zeitraum durch einen in einem Informationselement (IE) des Antwortframe enthaltenen Zeitgeber angegeben wird.

9. Respondergerät nach Anspruch 1, wobei die Temperatur des Respondergeräts durch ein TOA-(Time-of-Arrival)-Fehlerfeld und/oder ein TOD-(Time-of-Departure)-Fehlerfeld des Antwortframe angezeigt wird, und wobei optional das TOA-Fehlerfeld und/oder das TOD-Fehlerfeld auf einen vorbestimmten Wert gesetzt werden, der anzeigt, dass die Temperatur des Respondergeräts den Schwellenwert überschreitet.

10. Respondergerät nach Anspruch 1, wobei die ein oder mehreren Prozessoren ferner konfiguriert sind zum:
Ablehnen von Anforderungen von Entfernungsmessvorgängen während des festgelegten Zeitraums.

11. Respondergerät nach Anspruch 1, wobei die ein oder mehreren Prozessoren ferner konfiguriert sind zum:
Hervorrufen einer nachfolgenden Entfernungsmessanforderung vom Initiatorgerät als Reaktion darauf, dass die Temperatur des Respondergeräts unter den Schwellenwert fällt, und wobei optional das Hervorrufen der nachfolgenden Entfernungsmessanforderung das Senden, über den Transceiver, eines zum Auslösen des Sendens der nachfolgenden Entfernungsmessungsanforderung vom Initiatorgerät konfigurierten Aktionsframe beinhaltet, und wobei optional der Aktionsframe einen TR (Trigger Frame), Range Poll Frame, FTM-(Fine Timing Measurement)-Anforderungsframe, LMR-(Location Measurement Report)-Frame oder Vendor-Action-Frame umfasst.

12. Verfahren zur drahtlosen Kommunikation, durchgeführt von einem Respondergerät (502), das Folgendes beinhaltet:
Empfangen einer Anforderung für einen Entfernungsmessvorgang mit einem Initiatorgerät (104);
Feststellen, als Reaktion auf den Empfang der Anforderung für den Entfernungsmessvorgang, ob eine Temperatur des Respondergeräts (502) einen ersten Schwellenwert überschreitet; und
als Reaktion auf eine Feststellung, dass die Temperatur des Respondergeräts (502) den Schwellenwert überschreitet:
Bestimmen eines Zeitraums, nach dem erwartet wird, dass die Temperatur des Respondergeräts (502) unter den Schwellenwert sinkt; und
Senden eines Antwortframe, wobei der Antwortframe eine Angabe enthält, wobei die Angabe auf dem bestimmten Zeitraum basiert.

13. Verfahren nach Anspruch 12, wobei der bestimmte Zeitraum auf der Temperatur des Respondergeräts, einer Zeitdauer, während der die Temperatur des Respondergeräts den Schwellenwert überschritten hat, einem oder mehreren anderen zuvor bestimmten Zeiträumen für eine oder mehrere Temperaturen des Respondergeräts, die den Schwellenwert überschritten haben, einer Korrelation zwischen Temperaturen des Respondergeräts und aus Taktdrift und/oder Frequenzabweichungen zwischen dem Respondergerät und dem Initiatorgerät resultierenden Entfernungsmessfehlern, einer Menge an anstehenden Daten im Respondergerät, der Anzahl und Größe der vom Respondergerät verarbeiteten aktiven Verkehrsströme oder einer beliebigen Kombination daraus basiert.

14. Verfahren nach Anspruch 12, das ferner Folgendes beinhaltet:
Feststellen, nach Ablauf des festgelegten Zeitraums, ob die Temperatur des Antwortgeräts unter dem Schwellenwert liegt; und
Senden über den Transceiver, als Reaktion auf die Feststellung, dass die Temperatur des Antwortgeräts unter dem Schwellenwert liegt, eines Aktionsframe, der zum Auslösen einer nachfolgenden Anforderung von Entfernungsmessvorgängen vom Initiatorgerät konfiguriert ist.

15. Nichtflüchtiges computerlesbares Medium (540), das ausführbaren Computercode speichert, der Folgendes umfasst:
Empfangen einer Anforderung für einen Entfernungsmessvorgang mit einem Initiatorgerät (104);
Feststellen, als Reaktion auf den Empfang der Anforderung für den Entfernungsmessvorgang, ob eine Temperatur des Respondergeräts (502) einen ersten Schwellenwert überschreitet; und
als Reaktion auf eine Feststellung, dass die Temperatur des Respondergeräts (502) den Schwellenwert überschreitet:
Bestimmen eines Zeitraums, nach dem erwartet wird, dass die Temperatur des Respondergeräts (502) unter den Schwellenwert sinkt; und
Senden eines Antwortframe, wobei der Antwortframe eine Angabe enthält, wobei die Angabe auf dem bestimmten Zeitraum basiert.

## Revendications

1. Dispositif répondeur (502), comprenant :
un émetteur-récepteur configuré pour échanger des signaux sans fil avec un ou plusieurs dispositifs de communication sans fil (510) ;
une mémoire (540) ; et
un ou plusieurs processeurs (530) couplés pour communiquer avec la mémoire (540), les un ou plusieurs processeurs (530) étant configurés pour :
recevoir, par l'intermédiaire de l'émetteur-récepteur, une demande d'opération de télémétrie avec un dispositif initiateur (104) ;
en réponse à la réception de la demande d'opération de télémétrie, déterminer qu'une température du dispositif répondeur (502) atteint ou dépasse ou non un premier seuil ; et
en réponse à une détermination que la température du dispositif répondeur (502) atteint ou dépasse le seuil :
déterminer une période de temps après laquelle la température du dispositif répondeur (502) devrait descendre en dessous du seuil ; et
transmettre, au moyen de l'émetteur-récepteur, une trame de réponse, la trame de réponse comportant une indication, l'indication étant basée sur la période de temps déterminée.

2. Dispositif répondeur selon la revendication 1, dans lequel la transmission comprend :
la transmission de la trame de réponse comportant la période de temps déterminée uniquement lorsque la période de temps déterminée est inférieure à une valeur.

3. Dispositif répondeur selon la revendication 1, dans lequel la trame de réponse indique la température du dispositif répondeur.

4. Dispositif répondeur selon la revendication 1, dans lequel la détermination que la température du dispositif répondeur dépasse le seuil indique que des erreurs de télémétrie résultant d'une dérive d'horloge et/ou de décalages de fréquence entre le dispositif répondeur et le dispositif initiateur sont supérieures à une quantité.

5. Dispositif répondeur selon la revendication 1, dans lequel la période de temps déterminée indique un nombre d'intervalles de balise durant lesquels le dispositif initiateur doit s'abstenir de lancer des opérations de télémétrie avec le dispositif répondeur.

6. Dispositif répondeur selon la revendication 1, dans lequel la période de temps déterminée est basée sur la température du dispositif répondeur, une durée pendant laquelle la température du dispositif répondeur a dépassé le seuil, une ou plusieurs autres périodes de temps préalablement déterminées d'une ou plusieurs températures du dispositif répondeur qui ont dépassé le seuil, une corrélation entre des températures du répondeur et des erreurs de télémétrie résultant d'une dérive d'horloge et/ou de décalages de fréquence entre le dispositif répondeur et le dispositif initiateur, ou toute combinaison de ceux-ci.

7. Dispositif répondeur selon la revendication 1, dans lequel la trame de réponse comprend une trame d'action de mesure de synchronisation fine, FTM, une trame de déclenchement, TF, une trame d'interrogation de télémétrie, ou un rapport de mesure de position, LMR, de répondeur à initiateur, R2I.

8. Dispositif répondeur selon la revendication 1, dans lequel la période de temps déterminée est indiquée par une minuterie incluse dans un élément d'information, IE, de la trame de réponse.

9. Dispositif répondeur selon la revendication 1, dans lequel la température du dispositif répondeur est indiquée par l'un d'un champ d'erreur de temps d'arrivée, TOA, ou d'un champ d'erreur de temps de départ, TOD, de la trame de réponse ou par les deux, et éventuellement dans lequel l'un du champ d'erreur de TOA ou du champ d'erreur de TOD ou les deux sont réglés à une valeur prédéterminée indiquant que la température du dispositif répondeur dépasse le seuil.

10. Dispositif répondeur selon la revendication 1, dans lequel les un ou plusieurs processeurs sont configurés en outre pour :
refuser des demandes d'opérations de télémétrie durant la période de temps déterminée.

11. Dispositif répondeur selon la revendication 1, dans lequel les un ou plusieurs processeurs sont configurés en outre pour :
solliciter une demande de télémétrie ultérieure auprès du dispositif initiateur en réponse à une baisse de la température du dispositif répondeur en dessous du seuil, et éventuellement dans lequel la sollicitation de la demande de télémétrie ultérieure comporte la transmission, via l'émetteur-récepteur, d'une trame d'action configurée pour déclencher la transmission de la demande de télémétrie ultérieure à partir du dispositif initiateur, et éventuellement dans lequel la trame d'action comprend une trame de déclenchement, TF, une trame d'interrogation de télémétrie, une trame de demande de mesure de synchronisation fine, FTM, un rapport de mesure de position, LMR, ou une trame d'action de fournisseur.

12. Procédé de communication sans fil réalisé par un dispositif répondeur (502), comprenant :
la réception d'une demande d'opération de télémétrie avec un dispositif initiateur (104) ;
en réponse à la réception de la demande d'opération de télémétrie, la détermination qu'une température du dispositif répondeur (502) dépasse ou non un seuil ; et
en réponse à une détermination que la température du dispositif répondeur (502) dépasse le seuil :
la détermination d'une période de temps après laquelle la température du dispositif répondeur (502) devrait diminuer en dessous du seuil ; et
la transmission d'une trame de réponse, la trame de réponse comportant une indication, l'indication étant basée sur la période de temps déterminée.

13. Procédé selon la revendication 12, dans lequel la période de temps déterminée est basée sur la température du dispositif répondeur, une durée pendant laquelle la température du dispositif répondeur a dépassé le seuil, une ou plusieurs autres périodes de temps précédemment déterminées d'une ou plusieurs températures du dispositif répondeur qui ont dépassé le seuil, une corrélation entre des températures du dispositif répondeur et des erreurs de télémétrie résultant d'une dérive d'horloge et/ou de décalages de fréquence entre le dispositif répondeur et le dispositif initiateur, une quantité de données en file d'attente dans le dispositif répondeur, le nombre et la taille de flux de trafic actifs gérés par le dispositif répondeur, ou toute combinaison de ceux-ci.

14. Procédé selon la revendication 12, comprenant en outre :
après l'expiration de la période de temps déterminée, la détermination que la température du dispositif répondeur est inférieure ou non au seuil ; et
en réponse à la détermination que la température du dispositif répondeur est inférieure au seuil, la transmission, au moyen de l'émetteur-récepteur, d'une trame d'action configurée pour déclencher une demande ultérieure d'opération de télémétrie à partir du dispositif initiateur.

15. Support non transitoire lisible par ordinateur (540) stockant un code exécutable par ordinateur, comprenant :
la réception d'une demande d'opération de télémétrie avec un dispositif initiateur (104) ;
en réponse à la réception de la demande d'opération de télémétrie, la détermination qu'une température du dispositif répondeur (502) dépasse ou non un seuil ; et
en réponse à une détermination que la température du dispositif répondeur (502) dépasse le seuil :
la détermination d'une période de temps après laquelle la température du dispositif répondeur (502) devrait diminuer en dessous du seuil ; et
la transmission d'une trame de réponse, la trame de réponse comportant une indication, l'indication étant basée sur la période de temps déterminée.
